# EUROPEAN PATENT APPLICATION

(11) **EP 4 808 202 A1**
(43) Date of publication of application: **16.09.2026**
(21) Application number: 24893351.7
(22) Date of filing: 15.11.2024
(51) Int. Cl.: H04W 28/06

(54) **COMMUNICATION METHOD AND APPARATUS**

(30) Priority: 22.11.2023 CN 202311571175
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN)
(74) Representative: Thun, Clemens
(86) International application number: PCT/CN2024/132381
(87) International publication number: WO 2025/108193

(57) **Abstract**

Embodiments of this application provide a communication method and apparatus, and relate to the field of communication technologies. The method includes: A first communication apparatus receives first traffic-associated information transmitted through a first path, and adjusts (or determines), based on the first traffic-associated information, a first service processing policy corresponding to a first service. Because the first path is a path for transmitting a service flow, the first communication apparatus can obtain the first traffic-associated information earlier, so that the first communication apparatus can adjust the first service processing policy in a more timely manner.

## Description

### CROSS-REFERENCE TO RELATED APPLICATIONS

This application claims priority to Chinese Patent Application No. 202311571175.3, filed with the China National Intellectual Property Administration on November 22, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In an artificial intelligence (artificial intelligence, AI) service (for example, cloud gaming or virtual reality (virtual reality, VR)), a terminal device and an application server may collaboratively execute an AI task, to implement the AI service. The terminal device may run an application (application, APP) and may access the application server sequentially through the application and a network. A radio access network (radio access network, RAN) in the network may determine a task assignment point between the terminal device and the cloud server based on dynamic quality of service (quality of service, Qos/QoS) switching. A quality of service profile (quality of service profile, QoS Profile) (or referred to as a quality of service parameter set) may be used to describe communication QoS requirements of different task assignment points. In this way, a network side may determine a QoS profile, and notify an application layer of the terminal device or an application layer of the application server of information about the determined QoS profile, to indicate the application layer to execute a task based on a task assignment point or the like corresponding to the QoS profile.

A 5th generation system (5th generation system, 5GS) introduces an alternative quality of service (alternative quality of service, alternative QoS) mechanism. In this mechanism, in addition to a normal QoS profile, one or more alternative QoS profiles (alternative QoS profiles) may be provided for a QoS flow (flow). When a communication QoS requirement indicated by the normal QoS profile of the QoS flow cannot be met, the RAN may select a corresponding alternative QoS profile from the one or more alternative QoS profiles to serve the corresponding QoS flow, and notify an AF and the terminal device of an index (index) of the selected alternative QoS profile. In this way, the application layers corresponding to the terminal device and the AF may adjust a corresponding service processing policy (for example, indicate an allocation status of a task for service processing). The network selects an appropriate alternative QoS profile based on a communication status, a resource (such as computational power) status of the terminal device, and a resource status of the application server, and indicates the alternative QoS profile to the application. The application adjusts the service processing policy based on the alternative QoS profile. On the one hand, the resource statuses of the terminal device and the application server change in real time, and the network may not be able to perceive the computational power status of a node in time. On the other hand, the network needs to indicate the alternative QoS profile to the application server through a core network, causing a cumbersome procedure of indicating the alternative QoS profile, and making the application server unable to adjust the service processing policy in time.

### SUMMARY

Embodiments of this application provide a communication method and apparatus, to improve service processing policy adjustment timeliness.

According to a first aspect, an embodiment of this application provides a communication method. The method may be performed by a first communication apparatus. For example, the first communication apparatus may be a terminal device, a software or hardware module (such as a chip) in a terminal device, an application server, a software module or a hardware module (such as a chip) in an application server, a computing execution entity (computing execution entity, CEF), a software module or a hardware module (such as a chip) in a CEF, a combination of a terminal device and a CEF, or a combination of a terminal device and an application server. This is not limited in this application. The method includes: receiving first traffic-associated information transmitted through a first path; and determining, based on the first traffic-associated information, a first service processing policy corresponding to a first service. The first path is a path for transmitting a first service flow between the first communication apparatus and a second communication apparatus, the first traffic-associated information includes experienced quality of service information and/or service feature information, the experienced quality of service information indicates an actual transmission parameter of the first service flow in historical duration, the service feature information indicates an attribute of the first service corresponding to the first service flow, and the first service processing policy indicates a processing manner of the first service.

It should be understood that the historical duration may take any value. For example, the historical duration is any time length before a current moment, for example, may be a time length between a start moment at which the first service flow starts to be generated and the current moment. This is not specifically limited. In this embodiment of this application, the first traffic-associated information is transmitted through the first path for transmitting the first service flow. This may be understood as that the first traffic-associated information reuses the path for transmitting the first service flow, or may be understood as that the path for transmitting the first service flow is the same as the path for transmitting the first traffic-associated information. For example, the first traffic-associated information may be carried in at least one data packet in one or more data packets of the first service flow for transmission, or the first traffic-associated information reuses the first path, but is separately transmitted with at least one data packet. The transmission path of the first service flow is the same as the transmission path of the first traffic-associated information, but a transmission mode (for example, a transmission protocol) of the first service flow may be the same as or different from a transmission mode (for example, a transmission protocol) of the first traffic-associated information.

The first path may be a user plane-based path (or referred to as a user plane path), and the first path may include a plurality of nodes that the first service flow passes through. The plurality of nodes include, for example, the first communication apparatus and the second communication apparatus. Certainly, the plurality of nodes may further include another apparatus. This is not specifically limited. The first service processing policy may be understood as a service processing policy determined/selected/redetermined by the first service, and may include task allocation information, service indicator information, and/or the like. The task allocation information indicates a corresponding task allocated to the first communication apparatus and/or the second communication apparatus for processing the first service. The service indicator information indicates performance of implementing the first service.

The first communication apparatus and the second communication apparatus may be considered as a group of relative concepts. When the first communication apparatus serves as a transmit end, the second communication apparatus serves as a receive end; or when a device in the first communication apparatus serves as a transmit end, another device in the second communication apparatus may serve as a receive end. For example, if the first communication apparatus is a terminal device, the second communication apparatus may be an application server; or if the first communication apparatus is an application server, the first communication apparatus is a terminal device; or if the first communication apparatus is a terminal device, the second communication apparatus may be a CEF; or if the first communication apparatus is a CEF, the first communication apparatus is a terminal device; or if the first communication apparatus includes a terminal device and a CEF, the second communication apparatus correspondingly includes a CEF and a terminal device; or if the first communication apparatus includes a terminal device and an application server, the second communication apparatus correspondingly includes an application service and a terminal device; or if the first communication apparatus is a terminal device, the second communication apparatus is another terminal device.

In this embodiment of this application, because the first communication apparatus triggers adjustment of a service processing policy after obtaining the first traffic-associated information, the service processing policy is adjusted earlier. In addition, the first communication apparatus may determine (or adjust) the service processing policy by itself without triggering control signaling of an access network device, so that adjustment of the service processing policy does not require a large number of signaling interactions, thereby simplifying a process of adjusting the service processing policy, and helping the first communication apparatus adjust the service processing policy earlier. In conclusion, the method provided in this embodiment helps determine the service processing policy in a more timely manner. Further, the first communication apparatus and the second communication apparatus can process a service in a more timely manner by using an adjusted service processing policy (or referred to as a new service processing policy), thereby improving service processing effect. In addition, traffic-associated information reflects a service attribute and/or an actual data transmission status, so that the determined service processing policy better conforms to an actual service situation, thereby improving effect of subsequent service processing.

In a possible implementation, the first traffic-associated information may reuse the first path for separate transmission, that is, the first traffic-associated information and the first service flow are separately transmitted. Alternatively, the first traffic-associated information is carried in a data packet of the first service flow for transmission.

In the foregoing implementation, when the first traffic-associated information and the first service flow are separately transmitted, mutual interference between the first service flow and the first traffic-associated information can be reduced. If the first traffic-associated information is carried in the data packet of the first service flow, the first communication apparatus may obtain the first traffic-associated information when receiving the first service flow. This can reduce a number of interactions between the first communication apparatus and the second communication apparatus.

In a possible implementation, determining, based on the first traffic-associated information, the first service processing policy corresponding to the first service includes: determining first alternative quality of service configuration information based on the first traffic-associated information; and determining the first service processing policy based on a first association relationship and the first alternative quality of service configuration information. The first alternative quality of service configuration information indicates one or more communication indicators that the first service flow needs to meet, the first association relationship indicates an association relationship between one or more pieces of alternative quality of service configuration information and one or more service processing policies, the one or more pieces of alternative quality of service configuration information include the first alternative quality of service configuration information, and the one or more service processing policies include the first service processing policy.

It should be understood that the first association relationship may be preconfigured or predefined in the first communication apparatus; or the first communication apparatus determines the first association relationship based on first indication information, where the first indication information is received by the first communication apparatus from a third communication apparatus, and the first indication information indicates the first association relationship. This is not limited in this embodiment of this application. The third communication apparatus may be an access network device, a software or hardware module in an access network device, an apparatus that can implement an access network device, a core network device, a software or hardware module in a core network device, an apparatus that can implement a core network device, a task management function (task management function, TMF), a software or hardware module in a TMF, or an apparatus that can implement a function of a TMF. This is not specifically limited.

In the foregoing implementation, the first communication apparatus may directly determine the first service processing policy based on the first alternative quality of service configuration information and the first association relationship, and the first communication apparatus does not need to perform complex calculation, thereby making a manner of determining the first service processing policy simple.

In a possible implementation, before the first communication apparatus receives the first indication information from the third communication apparatus, the first communication apparatus may send a first request to the third communication apparatus, where the first request is used to request to determine a service processing policy corresponding to the first service, and the first request may indicate the one or more pieces of alternative quality of service configuration information. In this way, the first communication apparatus may determine the first association relationship based on the one or more pieces of alternative quality of service configuration information. This implementation is applicable to a case in which the first communication apparatus includes a terminal device.

In the foregoing implementation, the third communication apparatus may obtain the one or more pieces of alternative quality of service configuration information from the first communication apparatus, and trigger determining of the first association relationship, so that the third communication apparatus can determine the first association relationship more pertinently.

In a possible implementation, determining the first alternative quality of service configuration information based on the first traffic-associated information includes: determining the first alternative quality of service configuration information based on the first traffic-associated information and a second association relationship. The second association relationship includes an association relationship between the one or more pieces of alternative quality of service configuration information and one or more pieces of traffic-associated information, and the one or more pieces of traffic-associated information include the first traffic-associated information.

It should be understood that the second association relationship may be preconfigured or predefined in the first communication apparatus; or the second association relationship may be determined by the first communication apparatus based on second indication information, where the second indication information may be received from the third communication apparatus. The second indication information and the first indication information may be carried in a same message, or may be carried in different messages. This is not specifically limited.

In the foregoing implementation, the first communication apparatus may directly determine the first alternative quality of service configuration information based on the first traffic-associated information and the second association relationship, and the first communication apparatus does not need to perform complex calculation, thereby making a manner of determining the first alternative quality of service configuration information simple. In addition, the first traffic-associated information reflects an actual service situation. Therefore, the first alternative quality of service configuration information is determined by using the first traffic-associated information, so that an actual service processing process can meet a requirement of the first alternative quality of service configuration information, thereby ensuring service execution effect.

In a possible implementation, determining, based on the first traffic-associated information, the first service processing policy corresponding to the first service includes: determining the first service processing policy based on the first traffic-associated information and a third association relationship. The third association relationship includes an indication of an association relationship between one or more pieces of traffic-associated information and one or more service processing policies, the one or more pieces of traffic-associated information include the first traffic-associated information, and the one or more service processing policies include the first service processing policy.

It should be understood that the third association relationship may be preconfigured or predefined in the first communication apparatus, or may be determined by the first communication apparatus based on third indication information. This is not limited. For an implementation of the third communication apparatus, refer to the foregoing implementation of the third communication apparatus. This is not limited.

In the foregoing implementation, the first communication apparatus may directly determine the first service processing policy based on the first traffic-associated information and the third association relationship, thereby making a manner of determining the first service processing policy more direct.

In a possible implementation, the method further includes: adjusting, based on the task allocation information, the task for processing the first service by the first communication apparatus; and/or the service indicator information includes at least one of a frame rate, a bit rate, or a resolution corresponding to the first service, and the method further includes: adjusting, based on the service indicator information, at least one of the frame rate, the bit rate, or the resolution corresponding to the first service.

In the foregoing implementation, the first communication apparatus may adjust service processing related content in time based on a service processing policy, to ensure that a service processing manner is adjusted in time, thereby improving service processing effect.

In a possible implementation, the first alternative quality of service configuration information includes resource requirement information of a task corresponding to the first service, and the resource requirement information is used to describe a resource required for processing the task corresponding to the first service; and the method further includes: determining that a remaining resource of the first communication apparatus and/or a remaining resource of the second communication apparatus meet/meets the resource required for processing the task corresponding to the first service.

In the foregoing implementation, when the first alternative quality of service configuration information is selected, whether the remaining resources of the first communication apparatus and the second communication apparatus can meet the requirement of the first alternative quality of service configuration information is further considered, thereby ensuring smooth execution of the first service.

According to a second aspect, an embodiment of this application provides a communication method. The method may be performed by a second communication apparatus. For example, the second communication apparatus may be a terminal device, a software or hardware module in a terminal device, an apparatus that can implement a function of a terminal device, an application server, a software or hardware module in an application server, an apparatus that can implement a function of an application server, a CEF, a software or hardware module in a CEF, or an apparatus that can implement a function of a CEF. This is not specifically limited. The method includes: sending first traffic-associated information through a first path. The first path is a path for transmitting a first service flow between a first communication apparatus and the second communication apparatus, the first traffic-associated information includes experienced quality of service information and/or service feature information, the experienced quality of service information indicates an actual transmission parameter of the first service flow in historical duration, and the service feature information indicates an attribute of a first service corresponding to the first service flow. Optionally, the first traffic-associated information is used to determine a first service processing policy, and the first service processing policy indicates a processing manner of the first service.

In a possible implementation, the method further includes: receiving first information, where the first information indicates first alternative quality of service configuration information; and determining the first service processing policy based on the first alternative quality of service configuration information and a first association relationship. The first association relationship may be obtained from a third communication apparatus or the first communication apparatus, or may be preconfigured in the second communication apparatus. This is not specifically limited.

In a possible implementation, the first traffic-associated information may reuse the first path for separate transmission, that is, the first traffic-associated information and the first service flow are separately transmitted. Alternatively, the first traffic-associated information may be carried in a data packet of the first service flow for transmission.

In a possible implementation, the method further includes: determining the first service processing policy based on the first traffic-associated information.

In a possible implementation, determining, based on the first traffic-associated information, the first service processing policy corresponding to the first service includes: determining first alternative quality of service configuration information based on the first traffic-associated information; and determining the first service processing policy based on a first association relationship and the first alternative quality of service configuration information. The first alternative quality of service configuration information indicates one or more communication indicators that the first service flow needs to meet, the first association relationship indicates an association relationship between one or more pieces of alternative quality of service configuration information and one or more service processing policies, the one or more pieces of alternative quality of service configuration information include the first alternative quality of service configuration information, and the one or more service processing policies include the first service processing policy.

In a possible implementation, before the first communication apparatus receives first indication information from the third communication apparatus, the first communication apparatus may send a first request to the third communication apparatus, where the first request is used to request to determine a service processing policy corresponding to the first service, and the first request may indicate the one or more pieces of alternative quality of service configuration information. In this way, the first communication apparatus may determine the first association relationship based on the one or more pieces of alternative quality of service configuration information. This implementation is applicable to a case in which the first communication apparatus includes a terminal device.

In a possible implementation, determining the first alternative quality of service configuration information based on the first traffic-associated information includes: determining the first alternative quality of service configuration information based on the first traffic-associated information and a second association relationship. The second association relationship includes an association relationship between the one or more pieces of alternative quality of service configuration information and one or more pieces of traffic-associated information, and the one or more pieces of traffic-associated information include the first traffic-associated information.

In a possible implementation, determining, based on the first traffic-associated information, the first service processing policy corresponding to the first service includes: determining the first service processing policy based on the first traffic-associated information and a third association relationship. The third association relationship includes an indication of an association relationship between one or more pieces of traffic-associated information and one or more service processing policies, the one or more pieces of traffic-associated information include the first traffic-associated information, and the one or more service processing policies include the first service processing policy.

In a possible implementation, the method further includes: adjusting, based on the task allocation information, a task for processing the first service by the first communication apparatus; and/or the service indicator information includes at least one of a frame rate, a bit rate, or a resolution corresponding to the first service, and the method further includes: adjusting, based on the service indicator information, at least one of the frame rate, the bit rate, or the resolution corresponding to the first service.

In a possible implementation, the first alternative quality of service configuration information includes resource requirement information of a task corresponding to the first service, and the resource requirement information is used to describe a resource required for processing the task corresponding to the first service; and the method further includes: determining that a remaining resource of the first communication apparatus and/or a remaining resource of the second communication apparatus meet/meets the resource required for processing the task corresponding to the first service.

According to a third aspect, an embodiment of this application provides a communication method. The method may be performed by a third communication apparatus. For example, the third communication apparatus may be an access network device, a software or hardware module in an access network device, an apparatus that can implement a function of an access network device, a core network device, a software or hardware module in a core network device, an apparatus that can implement a function of a core network device, a task management function (task management function, TMF), a software or hardware module in a TMF, an apparatus that can implement a function of a TMF, an apparatus including a function of a terminal device and a function of a CEF, or an apparatus including a function of a terminal device and a function of an application server. This is not specifically limited. The method includes: receiving one or more pieces of alternative quality of service configuration information corresponding to a first service flow, where the alternative quality of service configuration information indicates one or more communication indicators that the first service flow needs to meet; and sending first indication information, where the first indication information indicates a first association relationship, the first association relationship indicates an association relationship between the one or more pieces of alternative quality of service configuration information and one or more service processing policies, the one or more service processing policies include a first service processing policy, and the first service processing policy indicates a processing manner of a first service corresponding to the first service flow.

In a possible implementation, the first association relationship is determined based on network status information and the one or more pieces of alternative quality of service configuration information, and the network status information includes information about one or more communication indicators that a network reaches or can support.

In a possible implementation, the first association relationship is determined based on network status information, resource status information, and the one or more pieces of alternative quality of service configuration information, and the resource status information indicates resource usage of a first communication apparatus and/or resource usage of a second communication apparatus.

In a possible implementation, the method further includes: sending second indication information, where the second indication information indicates a second association relationship, the second association relationship includes an association relationship between the one or more pieces of alternative quality of service configuration information and one or more pieces of traffic-associated information, the one or more pieces of traffic-associated information include first traffic-associated information, the first traffic-associated information includes experienced quality of service information and/or service feature information, the experienced quality of service information indicates an actual transmission parameter of the first service flow in historical duration, and the service feature information indicates an attribute of the first service.

According to a fourth aspect, an embodiment of this application provides a communication method. The method may be performed by a fourth communication apparatus. For example, the fourth communication apparatus may be an access network device, a software or hardware module in an access network device, an apparatus that can implement a function of an access network device, a core network device, a software or hardware module in a core network device, or an apparatus that can implement a function of a core network device. This is not specifically limited. Optionally, the fourth communication apparatus may be the same as or different from the foregoing third communication apparatus. This is not specifically limited. The method includes: receiving first traffic-associated information, where the first traffic-associated information is transmitted through a first path, the first path is a path for transmitting a first service flow between a second communication apparatus and a first communication apparatus, the first traffic-associated information includes experienced quality of service information and/or service feature information, the experienced quality of service information indicates an actual transmission parameter of the first service flow in historical duration, and the service feature information indicates an attribute of a first service corresponding to the first service flow; and determining first alternative quality of service configuration information based on the first traffic-associated information and a fourth association relationship, where the first alternative quality of service configuration information indicates one or more communication indicators that the first service flow needs to meet, the fourth association relationship includes an association relationship between one or more pieces of alternative quality of service configuration information and one or more pieces of traffic-associated information, the one or more pieces of alternative quality of service configuration information include the first alternative quality of service configuration information, and the one or more pieces of traffic-associated information include the first traffic-associated information.

According to a fifth aspect, an embodiment of this application provides a communication apparatus. The communication apparatus may be the first communication apparatus in the first aspect, a hardware module or a software module in the first communication apparatus, or an apparatus having a function of the first communication apparatus. The communication apparatus includes a corresponding means (means) or module configured to perform the first aspect or any possible implementation. For example, the communication apparatus includes a processing module (sometimes also referred to as a processing unit) and a transceiver module (sometimes also referred to as a transceiver unit).

For example, the transceiver module is configured to receive first traffic-associated information transmitted through a first path, and the processing module is configured to determine, based on the first traffic-associated information, a first service processing policy corresponding to a first service.

Optionally, the communication apparatus may further perform content in any possible implementation of the first aspect, and details are not described herein again.

According to a sixth aspect, an embodiment of this application provides a communication apparatus. The communication apparatus may be the second communication apparatus in the second aspect, a hardware module or a software module in the second communication apparatus, or an apparatus having a function of the second communication apparatus. The communication apparatus includes a corresponding means (means) or module configured to perform the second aspect or any possible implementation. For example, the communication apparatus includes a processing module (sometimes also referred to as a processing unit) and a transceiver module (sometimes also referred to as a transceiver unit).

For example, the transceiver module is configured to send first traffic-associated information under control of the processing module.

Optionally, the communication apparatus may further perform content in any possible implementation of the second aspect, and details are not described herein again.

According to a seventh aspect, an embodiment of this application provides a communication apparatus. The communication apparatus may be the third communication apparatus in the third aspect, a hardware module or a software module in the third communication apparatus, or an apparatus having a function of the third communication apparatus. The communication apparatus includes a corresponding means (means) or module configured to perform the third aspect or any possible implementation. For example, the communication apparatus includes a processing module (sometimes also referred to as a processing unit) and a transceiver module (sometimes also referred to as a transceiver unit).

For example, the transceiver module is configured to: under control of the processing module, receive one or more pieces of alternative quality of service configuration information corresponding to a first service flow, and send first indication information, where the first indication information indicates a first association relationship.

Optionally, the communication apparatus may further perform content in any possible implementation of the third aspect, and details are not described herein again.

According to an eighth aspect, an embodiment of this application provides a communication apparatus. The communication apparatus may be the fourth communication apparatus in the fourth aspect, a hardware module or a software module in the fourth communication apparatus, or an apparatus having a function of the fourth communication apparatus. The communication apparatus includes a corresponding means (means) or module configured to perform the fourth aspect or any possible implementation. For example, the communication apparatus includes a processing module (sometimes also referred to as a processing unit) and a transceiver module (sometimes also referred to as a transceiver unit).

For example, the transceiver module is configured to receive first traffic-associated information, and the processing module is configured to determine first alternative quality of service configuration information based on the first traffic-associated information and a fourth association relationship.

Optionally, the communication apparatus may further perform content in any possible implementation of the fourth aspect, and details are not described herein again.

According to a ninth aspect, an embodiment of this application provides a communication apparatus, including a processor and an interface circuit. The interface circuit is configured to: receive a signal from another communication apparatus other than the communication apparatus and transmit the signal to the processor, or send a signal from the processor to another communication apparatus other than the communication apparatus; and the processor is configured to implement the method according to the first aspect, the second aspect, the third aspect, or the fourth aspect or any possible implementation by using a logic circuit or by executing code instructions.

In a specific implementation process, the communication apparatus may be a chip, and the processor may be a transistor, a gate circuit, a trigger, various logic circuits, or the like. A specific implementation of the processor is not limited in this embodiment of this application.

In an implementation, the communication apparatus may be a wireless communication device, that is, a computer device supporting a wireless communication function. Specifically, the wireless communication device may be a terminal device such as a smartphone, or may be a radio access network device such as a base station.

In another implementation, the communication apparatus may be a part of devices in the wireless communication device, for example, an integrated circuit product such as a system chip or a communication chip. The system chip may also be referred to as a system on chip (system on chip, SoC), or briefly referred to as a SoC chip. The communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. During physical implementation, some or all chips in the communication chip may be integrated into the SoC chip. For example, the baseband processing chip is integrated into the SoC chip, but the radio frequency processing chip is not integrated into the SoC chip. The interface circuit may be a radio frequency processing chip in the wireless communication device, and the processor may be a baseband processing chip in the wireless communication device. The interface circuit may be an input/output interface, an interface circuit, an output circuit, an input circuit, a pin, a related circuit, or the like on the chip or a chip system. The processor may alternatively be embodied as a processing circuit or a logic circuit.

According to a tenth aspect, an embodiment of this application provides a communication apparatus. The communication apparatus includes a processor and a storage. The storage is configured to store one or more computer programs, the one or more computer programs include computer-executable instructions, and when the communication apparatus runs, the processor executes the one or more computer programs stored in the storage, so that the communication apparatus performs the method according to the first aspect, the second aspect, the third aspect, or the fourth aspect or any possible implementation.

Optionally, the communication apparatus further includes other components, for example, an antenna, an input/output module, and an interface. These components may be hardware, software, or a combination of software and hardware.

According to an eleventh aspect, an embodiment of this application provides a chip system. The chip system includes a processor and an interface. The processor is configured to invoke instructions from the interface and run the instructions, and when the processor executes the instructions, the method according to the first aspect, the second aspect, the third aspect, or the fourth aspect or any possible implementation is implemented.

According to a twelfth aspect, an embodiment of this application provides a computer-readable storage medium. The computer-readable storage medium is configured to store a computer program or instructions. When the computer program or the instructions are run, the method according to the first aspect, the second aspect, the third aspect, or the fourth aspect or any possible implementation is implemented.

According to a thirteenth aspect, an embodiment of this application provides a computer program product including instructions. When the instructions are run on a computer, the method according to the first aspect, the second aspect, the third aspect, or the fourth aspect or any possible implementation is implemented.

For beneficial effects of any one of the technical solutions in the second aspect to the thirteenth aspect, refer to the beneficial effects of the corresponding technical solution in the first aspect. Repeated content is not listed herein again.

### BRIEF DESCRIPTION OF DRAWINGS

FIG. 1 is a diagram of a scenario to which an embodiment of this application is applicable;
FIG. 2 is a diagram of another scenario to which an embodiment of this application is applicable;
FIG. 3 is a schematic flowchart of adjusting a service processing policy;
FIG. 4 is a diagram of still another scenario to which an embodiment of this application is applicable;
FIG. 5 is a diagram of yet another scenario to which an embodiment of this application is applicable;
FIG. 6 is a diagram of a structure of a communication system to which an embodiment of this application is applicable;
FIG. 7 is a diagram of a structure of another communication system to which an embodiment of this application is applicable;
FIG. 8 is a diagram of a structure of still another communication system to which an embodiment of this application is applicable;
FIG. 9 is a diagram of a communication method according to an embodiment of this application;
FIG. 10 is a diagram of another communication method according to an embodiment of this application;
FIG. 11 is a diagram of still another communication method according to an embodiment of this application;
FIG. 12a and FIG. 12b are a diagram of yet another communication method according to an embodiment of this application;
FIG. 13 is a diagram of a structure of a communication apparatus according to an embodiment of this application;
FIG. 14 is a diagram of a structure of another communication apparatus according to an embodiment of this application; and
FIG. 15 is a diagram of a structure of still another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

For ease of understanding, the following describes some terms in embodiments of this application by using examples.
1. A service flow is a data flow related to a service. For example, if a device A and a device B collaborate to implement a service, a data packet that is related to the service and that is transmitted between the device A and the device B forms a service flow of the service. After being filtered by a user plane function (user plane function, UPF), a service flow may be referred to as a QoS flow. In other words, the QoS flow may be understood as a data flow that corresponds to a service and that meets a specific condition. In some cases, a service flow and a QoS flow are also interchangeable.
2. QoS configuration information serves a service flow, and is used to describe one or more communication indicators that the service flow needs to meet. The QoS configuration information may include communication-related information and computing-related information. For example, the communication-related information may be used to describe a communication requirement that the service flow needs to meet, and/or describe a communication requirement that a task corresponding to a first service needs to meet. For example, the computing-related information may be further used to describe a computing requirement that the task corresponding to the first service needs to meet.

The communication-related information includes, for example, a QoS profile (QoS profile) of the service flow. The QoS profile may indicate a QoS parameter (parameter) (or parameter set) of the service flow. Alternatively, it may be understood that the QoS configuration information indicates the QoS parameter (or parameter set) of the service flow. The QoS parameter of the service flow includes at least one of a QoS profile index (index), a guaranteed flow bit rate (guaranteed flow bit rate, GFBR), a guaranteed flow bit rate (guaranteed bit rate, GBR), a packet delay budget (packet delay budget, PDB), a packet error rate (packet error rate, PER), an uplink/downlink (uplink/downlink, UL/DL) channel status, or a maximum data burst volume (maximum data burst volume, MDBV). In this case, the GFBR, the PDB, the PER, the UL/DL channel status, the MDBV, and the like all may be one or more communication indicators. It should be understood that, in some cases (for example, the QoS configuration information includes only the QoS profile of the service flow), the QoS configuration information may also be referred to as a QoS profile, a QoS configuration parameter set, a QoS parameter set, or the like.

The communication-related information may further include, for example, a QoS parameter corresponding to a task. The QoS parameter corresponding to the task includes an overall QoS parameter of the task, and/or includes QoS parameters of some or all of a plurality of subtasks in the task. A QoS parameter of one subtask may include at least one of a throughput, an input data rate, and an output data rate of the subtask. In this case, the throughput, the input data rate, the output data rate, and the like corresponding to the subtask may also be one or more communication indicators. The input/output data rate or the throughput represents a communication QoS requirement of input/output data of the task.

For example, the computing-related information may be used to describe resource requirement information, for example, describe resource requirement information of a task, including overall resource requirement information of the task, and/or resource requirement information of some or all of a plurality of subtasks included in the task. Resource requirement information of a subtask in the overall resource requirement information of the task may be used to describe a resource required for implementing the subtask, the resource is, for example, a compute resource and/or a storage resource, and specifically, the resource requirement information of the subtask may include, for example, at least one of resource quantity information, resource type information, or resource performance information for implementing the subtask. The resource type information is used to describe a resource type. For example, the resource is a compute resource. The resource quantity information may be represented by an amount of hardware providing the resource, for example, 10 graphics processing units (graphics processing unit, GPU). The resource performance information indicates, for example, at least one of a computing energy consumption requirement (or may be referred to as computing energy consumption), a computing delay requirement (or may be referred to as a computing delay), and a computing precision requirement (or may be referred to as computing precision) that are required.

A computing type is a type of physical hardware whose computational power is required for executing the task. The computing type may be classified based on hardware providing computational power, for example, may be classified into task computing types such as a central processing unit (central processing unit, CPU), a graphics processing unit (graphics processing unit, GPU), a neural network processing unit (neural network processing unit, neural network processing unit), and a tensor processing unit (tensor processing unit, TPU). The computing type may alternatively be classified based on a specific service type, for example, may be classified into task types such as an image/video recognition type, a compression type, a graphics rendering type, an AI training type, an AI inference type, a perception processing type, a high-performance computing type, and a big data offline analysis type.

The input/output data throughput may represent a communication data amount requirement of the input/output data of the task. Optionally, the input/output data throughput may further represent a communication QoS parameter (5G QoS identifier, 5G QoS identifier) defined by new radio (new radio, NR), for example, a UL/DL PDB (Uplink/Downlink Packet Delay Budget, uplink/downlink packet delay budget), a GBR (Guaranteed Bit Rate, guaranteed bit rate), and a maximum data burst volume (Maximum Data Burst Volume, MDBV).

A computation amount requirement refers to a computing capability required for executing the task, and may be represented as a required computing capability of a processor, for example, a number of operations that can be performed by the processor per second or a number of floating-point operations performed by the processor per second. Optionally, computation amount requirement information may further include parameter requirement information such as a model, a memory, an I/O speed, and a clock frequency of hardware required for executing the task, for example, a hertz value that the clock frequency needs to reach, a required IOPS (Input/Output Operations per Second, input/output operations per second) value of a bandwidth, and a required number of bytes of a memory capacity. An I/O read/write speed requirement and a memory requirement may also be used as independent QoS parameters of the task.

The computing delay requirement refers to a time within which the task needs to be completed.

The computing energy consumption requirement refers to an amount of energy or power that a device needs to consume to execute the task. For example, if some subtasks of a compute task are scheduled to a terminal device for execution, a computing power consumption parameter indicates total power consumption of the terminal device that includes transmit power consumption of the terminal device and computing power consumption of the terminal device and that is required by the task. The computing power consumption of the terminal device may be average computing power consumption of the terminal device in a long time, or may be computing power consumption of the terminal device for completing single processing or in a short time, for example, computing power consumption of the terminal device for processing each video frame or computing power consumption of the terminal device for computing each subtask, or may be average computing power consumption of the terminal device in a predefined period of time. The computing power consumption of the terminal device may also be converted into a corresponding computing energy consumption indicator of the terminal device in a unit of watt, joule, or the like.

The computing precision requirement is a requirement for an error between a computation result and an accurate value or a real value. For example, the precision requirement does not exceed 5%. Computing precision may also be accuracy of an inference/training result obtained by using an AI model/algorithm.

Alternative QoS configuration information is optional QoS configuration information, or is considered as candidate QoS configuration information. For content of the alternative QoS configuration information, refer to the content of the QoS configuration information. It should be understood that the alternative QoS configuration information also serves the service flow. Therefore, two concepts of the alternative QoS configuration information and the QoS configuration information have no substantive difference and are interchangeable.

3. An RRC parameter may also be referred to as an RRC parameter group (group), and is used for air interface transmission. For example, the RRC parameter includes a semi-persistent scheduling (or semi-static scheduling) (semi-persistent scheduling, SPS) parameter, a configured grant (configured grant, CG) resource parameter, or a discontinuous reception (discontinuous reception, DRX) configuration parameter. Discontinuous reception may also be referred to as noncontinuous reception.

A CG includes a time domain resource, a frequency domain resource, and/or the like. The time domain resource may include, for example, a configured grant period (which may be referred to as a CG period). The frequency domain resource may include, for example, a number of CGs, specifically, for example, a number of configured grant resource blocks (resource block, RB). The CG may be for uplink transmission. A network side activates one uplink grant for a terminal device. If the terminal device does not receive deactivation, the terminal device may always use resources specified in a 1^{st} uplink grant to perform uplink transmission, and the terminal device may send data on a physical uplink shared channel (physical uplink shared channel, PUSCH) by using these configured grant resources. An NR protocol supports two types of CG resource configurations. One is to configure a CG time domain resource, including a periodicity, an offset, a start symbol and a length of a PUSCH, and a number of repetitions of the CG resource, by using RRC signaling. The other is to configure a periodicity and a number of repetitions by using RRC signaling (specifically, for example, IE ConfiguredGrantConfig), and configure the other parameters by using downlink control information (downlink control information, DCI) signaling (IE ConfiguredGrantConfig), including indicating uplink configured grant activation and deactivation.

SPS is used to enable one user to use same time-frequency resources in a specified semi-persistent scheduling periodicity (for example, 20 ms) until the resources are released. For example, a downlink SPS parameter includes a radio network temporary identifier (radio network temporary identifier, cs-RNTI), nrof hybrid automatic repeat request (hybrid automatic repeat request, HARQ)-Processes, harq-ProcID-Offset, and a periodicity (periodicity). The cs-RNTI is an RNTI for receiving DCI activation/deactivation/retransmission, the nrof-HARQ-Processes is a number of HARQs that can be supported by SPS, the harq-ProID-Offset is used to determine a parameter for downlink SPS HARQ ID computing, and the periodicity is a transmission periodicity parameter of downlink SPS. The SPS parameter includes, for example, an SPS period.

DRX is used for discontinuous message reception. After DRX is activated, the terminal device may suspend PDCCH listening and temporarily turn off a receiver when there is no service, thereby reducing power consumption. The DRX configuration parameter includes DRX entry and exit (such as a DRX start point selection (DRX start offset)), a DRX cycle (classified into a long cycle and a short cycle), a number of subframes that a DRX cycle lasts, and a number of repetitions of a short DRX cycle (short cycle timer). The DRX parameter includes, for example, the DRX cycle.

4. Network status information may also be referred to as status information of a communication network, status information of a network, communication network status information, or the like, and is information about one or more communication indicators that the network can reach or support, or may be information about one or more actual communication indicators of the network. The network status information includes at least one of the following: an uplink/downlink channel status, a modulation and coding scheme (modulation and coding scheme, MCS), a number of physical resource blocks (physical resource block, PRB), a guaranteed flow bit rate of the network, a packet delay budget of the network, a current packet error rate of the network, a transmission rate of the network, a guaranteed transmission data size of the network, channel state information of the network, buffer status report information of the network, or congestion status information of the network. Correspondingly, the one or more communication indicators that the network status information can reach or support include at least one of the uplink/downlink channel status, the MCS, the number of PRBs, the guaranteed flow bit rate, the packet delay budget, the packet error rate, the transmission rate, the guaranteed transmission data size, the channel state information, a buffer status report, or a congestion status. The congestion status information may be information related to a queue length of a data packet buffered in a layer 1 or layer 2 protocol stack of an access network device, for example, information related to a buffer status report (buffer status report, BSR). It should be understood that network status information may be different at different moments, and the network status information in embodiments of this application may be current or present network status information that is measured or detected.

5. Resource status information indicates usage of a resource by an apparatus. Because there are a plurality of types of resources, the resource status information may indicate usage of the plurality of types of resources by the apparatus, for example, may indicate computational power status information of the apparatus. The computational power status information may indicate at least one of computational power type information, computational power size information, information about a supported service type, and the like.

The computational power type information may be classified based on a physical hardware type, including at least one of a CPU, a GPU, an NPU, or a TPU. Optionally, the computational power type information may further include at least one of a model, a memory, a clock frequency, or the like of the hardware.

The computational power size information may be directly represented as a number of operations that can be performed by a processor per second or a number of floating-point operations performed by a processor per second. The computational power size information may further include a clock frequency (in a unit of hertz Hz), an I/O bandwidth (in a unit of Gbits/S or IOPS), heat dissipation design power consumption (in a unit of watt), a memory capacity (in a unit of byte), a computing completion probability, a computing error probability, or the like.

The supported service type is a service type supported by the apparatus, for example, at least one of an image/video rendering service, an AI training service, an AI inference service, a perception processing service, a high-performance computing service, or a big data offline analysis service.

6. A service processing policy indicates a service processing manner. In other words, the service processing policy indicates how to process a service, or indicates some parameters related to service processing. The service processing policy specifically includes task allocation information and/or service indicator information.

The task allocation information may also be referred to as task assignment result information, task scheduling information, or the like, and may indicate specific apparatuses executing a specific part of subtasks of a task, or the like. The task is some or all tasks that need to be executed to implement the service. The task allocation information may specifically include, for example, at least one of a task implementation mode, a task assignment (task assignment) mode, or a subtask assignment (subtask assignment) mode (which may be referred to as a task allocation mode or scheduling mode). The task implementation mode indicates specific apparatuses implementing a task, for example, is a device-cloud collaboration mode. The device-cloud collaboration mode may be considered as a specific implementation of the task assignment mode. When a terminal device and an application server collaborate to implement a task, content of the task assignment mode may be the same as content of the device-cloud collaboration mode. The device-cloud collaboration mode or the task assignment mode may indicate a task division mode between the terminal apparatus and the cloud server. For example, the device-cloud collaboration mode or the task assignment mode may indicate to enable or disable reflection rendering, enable or disable a dynamic diffuse global illumination (dynamic diffuse global illumination, DDGI) rendering function, or the like. The task assignment mode indicates a task that needs to be executed by an apparatus. The subtask assignment mode indicates a subtask that needs to be executed by an apparatus. The task allocation information may specifically indicate, for example, the application server to enable the DDGI or reflection rendering function, or the application server to disable the DDGI or reflection rendering function, or the application server to enable the DDGI or reflection rendering function and the terminal device to disable the DDGI or reflection rendering function, or the application server to disable the DDGI or reflection rendering function and the terminal device to enable the DDGI or reflection rendering function.

Optionally, the task allocation information further includes information about a resource allocated to the task, for example, a number of resources allocated to the task, types of the resources, and/or the like. The information about the resource allocated to the task includes information about a resource allocated to each apparatus (or device) that implements the service.

The service indicator information refers to some performance that can be implemented by the service, for example, includes at least one of a bit rate, a frame size, a resolution, or a frame rate of the service. The bit rate corresponding to the service may also be considered as a bit rate corresponding to the service, for example, may be a bit rate in a process in which an apparatus transmits a service flow corresponding to the service, and/or a bit rate in a process in which the apparatus processes the service flow corresponding to the service (for example, a bit rate in a process of encoding and decoding the service flow). The frame size, the resolution, or the frame rate may be, for example, a frame size, a resolution, or a frame rate of a picture presented in a service implementation process. For example, the frame rate is a frame rate corresponding to a picture presented in a service implementation process, and the frame rate may be measured in frames per second (frames per second, FPS).

7. A protocol data unit (protocol data unit, PDU) session (session) is a carrier of a PDU service. The PDU session is used to connect a terminal device and an external data network (data network, DN) to exchange a service data packet. Once a PDU session is established, a data transmission channel between the terminal device and the DN is established. A transmission process of a user plane tunnel of the PDU session includes a process between the terminal device and an access network, a process between the access network and a UPF, a process between the access network and a UPF-DN, and the like. A PDU session in 5G includes at least one of attributes such as single network slice selection assistance information (single network slice selection assistance information, S-NSSAI), a data network name (data network name, DNN), a PDU session type (type), a service and session continuity mode (service and session continuity mode, SSC Mode), a PDU session ID, user plane security enforcement information (user plane security enforcement information), and a multi-access PDU connectivity service (multi-access PDU connectivity service).

It should be understood that, with continuous evolution of a standard, the foregoing terms (such as the alternative QoS configuration information, the RRC parameter, and the service processing policy) may have other names. This is not specifically limited in embodiments of this application.

In embodiments of this application, unless otherwise specified, a number of nouns represents "a singular noun or a plural noun", that is, "one or more". In addition, "at least one" means one or more, and "a plurality of" means two or more. Moreover, "and/or" describes an association relationship between associated objects, and represents that three relationships may exist. For example, A and/or B may represent the following cases: Only A exists, both A and B exist, and only B exists, where A and B may be singular or plural. A character "/" generally indicates an "or" relationship between the associated objects. For example, A/B indicates A or B. In addition, "at least one of the following items (pieces)" or a similar expression thereof means any combination of these items, including any combination of singular items (pieces) or plural items (pieces). For example, at least one of a, b, or c indicates "a", "b", "c", "a and b", "a and c", "b and c", or "a, b, and c", where a, b, and c may be singular or plural.

A service may include an AI service. The AI service is a service implemented based on an AI model. The AI service may include a video rendering service represented by cloud gaming and VR, terminal visual cognition, augmented reality/mixed reality (augmented reality/mixed reality, AR/MR), and the like. AI tasks related to the AI service include, for example, collecting user behavior data such as an image, a video, a posture, or a voice and surrounding environment data by a terminal device such as a smartphone, a vehicle, or a robot by using a sensor such as a radar, a camera, a handle, or a microphone, and then performing an operation such as voice or image recognition or video processing by using an AI model.

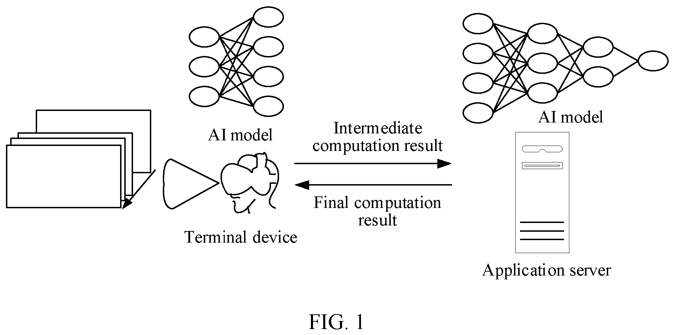

An AI task may be deployed on a terminal device, but this manner has a high requirement on computational power of the terminal device. An AI task may also be deployed on an application server, but this also has a high requirement on a bandwidth of a network side. Therefore, a manner of collaboratively deploying an AI task by a terminal device and an application server is proposed. FIG. 1 is a diagram of a scenario to which an embodiment of this application is applicable, or may be considered as a diagram of collaboratively deploying an AI task by a terminal device and an application server. As shown in FIG. 1, an application may be deployed on each of the terminal device and the application server, and the application in each of the terminal device and the application server may run an AI model. The application is configured to provide a service or a corresponding function for the terminal device, and may be installed and deployed by a device vendor, an operator, or a third party. The application may be an application, an applet, a sub-application, a web page, or the like pre-installed in the device. This is not limited in this application. The application server may include one or more physical servers, cloud servers, or the like, and the application server may also be referred to as a cloud (cloud) or a cloud platform (cloud platform).

In a scenario of collaboratively deploying the AI task, the terminal device may determine an intermediate computation result based on the AI model, and send the intermediate computation result to the application server; and the application server obtains a final computation result (for example, an inference result of the AI model) by using the AI model, and feeds back the final computation result to the terminal device.

The terminal device is a device having a wireless transceiver function, and may further allow a user to access a network. The terminal device has a computing capability, and processes a communication service such as AI and a third-party application service such as AR. The terminal device may be a fixed device, a mobile device, a handheld device, a wearable device, a vehicle-mounted device, or a wireless apparatus (for example, a communication module or a chip system) built in the foregoing device. The terminal device is configured to connect a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), smart grid (smart grid), smart furniture, smart office, smart wearable, smart transportation, smart city (smart city), an uncrewed aerial vehicle, and a robot. For example, the terminal device may be VR glasses. The terminal device may be sometimes referred to as user equipment (user equipment, UE), a terminal, an access station, a UE station, a remote station, a wireless communication device, a user apparatus, or the like.

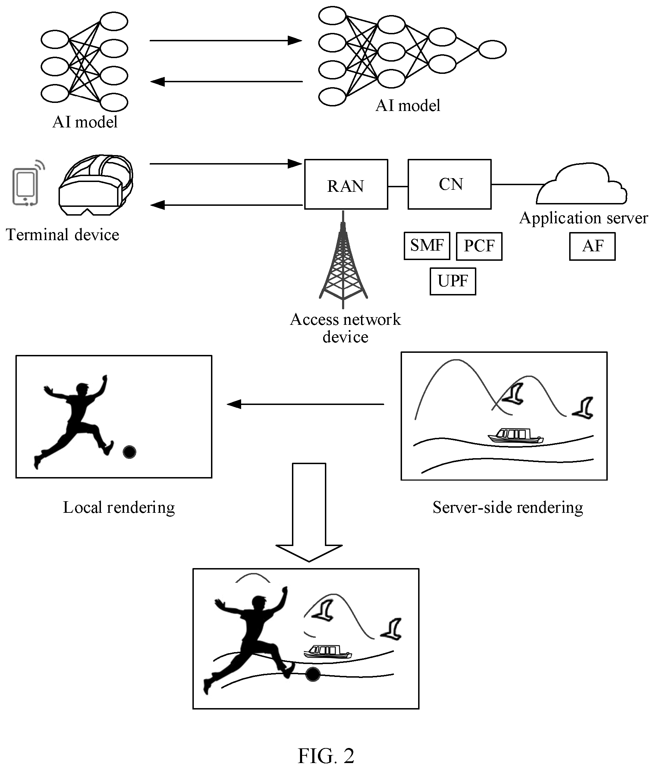

With reference to a diagram of a scenario shown in FIG. 2, the following describes a data transmission process in the scenario in which the terminal device and the application server collaborate in FIG. 1. In addition to the terminal device and the application server, FIG. 2 further shows an access network (for example, a radio access network (radio access network, RAN)) and a core network (core network, CN). The terminal device may communicate with the application server sequentially through the access network and the core network. The application server may be located in a DN after a core network user plane function, and exchange data with the core network user plane function through an N6 interface, to provide a computing service. An application function (application function, AF) may be deployed on the application server.

In FIG. 2, an application may be deployed on each of the terminal device and the application server, and an AI task may be implemented through application collaboration. For example, the terminal device performs local rendering by using an AI model. For example, the terminal device locally renders a foreground, for example, a person who is playing football. The application server performs server-side rendering by using an AI model, and renders a background, for example, a river, a ship, and an egret. The application server may transmit the rendered background to the terminal device through the core network user plane function, the access network, and the like, so that the terminal device can output a final rendering result based on the background and the foreground.

The access network may include one or more access network devices. The access network device is a device having a wireless transceiver function, and is configured to communicate with the terminal device. The access network device includes but is not limited to a base station (BTS, NodeB, eNodeB/eNB, or gNodeB/gNB) in the foregoing communication system, a transmission reception point (transmission reception point, TRP), a subsequently evolved base station in 3GPP, an access node in a wireless fidelity (wireless fidelity, Wi-Fi) system, a wireless relay node, a wireless backhaul node, a satellite, an uncrewed aerial vehicle, and the like. The base station may be a macro base station, a micro base station, a pico base station, a small cell, a relay station, or the like. A plurality of base stations may support networks of a same access technology mentioned above, or may support networks of different access technologies mentioned above. The base station may include one or more co-sited or non-co-sited transmission reception points. Alternatively, the access network device may be a radio controller, a central unit (central unit, CU) that may also be referred to as an aggregation unit, and/or a distributed unit (distributed unit, DU) in a cloud radio access network (cloud radio access network, C(R)AN) scenario. Alternatively, the access network device may be a server, a wearable device, a vehicle-mounted device, or the like. For example, an access network device in a vehicle-to-everything (vehicle-to-everything, V2X) technology may be a roadside unit (roadside unit, RSU). An example in which the access network device is a base station is used below for description. A plurality of access network devices in the communication system may be base stations of a same type, or may be base stations of different types. The base station may communicate with the terminal device, or may communicate with the terminal device through a relay station. The terminal device may communicate with a plurality of base stations in different access technologies.

In a possible architecture of the access network device, the access network device includes a central unit (central unit, CU) and/or a distributed unit (distributed unit, DU). The CU and the DU may be understood as division of the access network device from a perspective of logical functions. The CU and the DU may be physically separated, or may be deployed together. This is not specifically limited in embodiments of this application. One CU may be connected to one DU, or a plurality of DUs may share one CU. The CU and the DU may be divided based on a protocol stack. In a possible manner, RRC, a service data adaptation protocol (service data adaptation protocol, SDAP) stack, and a packet data convergence protocol (packet data convergence protocol, PDCP) layer are deployed in the CU, and a radio link control (radio link control, RLC) layer, a media access control (media access control, MAC) layer, and a physical layer are deployed in the DU. In embodiments of this application, the CU and the DU are not completely limited to being divided in the foregoing protocol stack manner. There may be another division manner, for example, division based on a service type.

Alternatively, the access network device may be a central unit control plane (CU-CP) node or a central unit user plane (CU-UP) node, or include a CU-CP and a CU-UP. The CU-CP is responsible for a control plane function, and mainly includes RRC and a PDCP-C. The PDCP-C is mainly responsible for data encryption and decryption, integrity protection, data transmission, and the like on a control plane. The CU-UP is responsible for a user plane function, and mainly includes an SDAP and a PDCP-U. The SDAP is mainly responsible for processing data of the core network and mapping a flow (flow) to a bearer. The PDCP-U is mainly responsible for encryption and decryption, integrity protection, header compression, sequence number maintenance, data transmission, and the like on a data plane.

In different systems, the CU (including the CU-CP or the CU-UP) or the DU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

The core network CN is configured to implement at least one of functions such as mobility management, data processing, session management, and policy and charging. Names of devices that implement core network functions in systems of different access technologies may be different. This is not limited in embodiments this application. The core network may also include one or more access network devices, for example, may include a session management function (session management function, SMF), a policy control function (policy control function, PCF), and a UPF.

In a possible design, the terminal device may include an application layer and an access stratum. The application layer may be an operating system or an application of the terminal device. For content of the application, refer to the foregoing descriptions. The access stratum (access stratum, AS) may be an RRC layer and a protocol layer below the RRC layer in a control plane protocol stack of the terminal device and the access network device. The AS is responsible for processing an interaction between the access network and the terminal device, or may be understood as a functional module for performing wireless communication between the terminal device and the access network device. The access stratum may include the RRC layer, a packet data convergence protocol (packet data convergence protocol, PDCP) layer, a media access control (media access control, MAC) layer, a physical layer (physical layer, PHY), and the like.

The RRC layer is responsible for a control plane process related to the access network. The PDCP layer is mainly responsible for internet protocol (internet protocol, IP) header compression, encryption, and integrity protection. The MAC layer is mainly responsible for logical channel multiplexing, hybrid automatic repeat request (hybrid automatic repeat request, HARQ) retransmission, and a scheduling-related function. The PHY layer is mainly responsible for functions such as encoding, decoding, modulation, demodulation, and multi-antenna mapping.

It should be understood that, in embodiments of this application, a device configured to implement a function of a specific device may be a device, or may be a software module or a hardware module (such as a chip) that can support the device in implementing the function. For example, a device configured to implement a function of a terminal device may be a terminal device, or may be a software module or a hardware module (such as a chip) that can support the terminal device in implementing the function. In the technical solutions provided in embodiments of this application, an example in which an apparatus configured to implement a function of a terminal device is a terminal device is used to describe the technical solutions provided in embodiments of this application. A device configured to implement a function of an access network device may be an access network device, or may be a software module or a hardware module (such as a chip) that can support the access network device in implementing the function. In the technical solutions provided in embodiments of this application, an example in which an apparatus configured to implement a function of a network is an access network device is used to describe the technical solutions provided in embodiments of this application.

It should be understood that, in addition to collaborative computing between a terminal device and an application server, the solutions provided in embodiments of this application may be further applied to a scenario of processing a compute task in a distributed manner, specifically, for example, a home/industrial internet of things scenario. For example, a compute task of a terminal device may be offloaded to a plurality of terminal devices or servers for distributed processing, that is, collaborative computing is performed between terminal devices (or servers), thereby improving compute resource utilization of an edge device.

Most AI tasks belong to services with heavy burst traffic, and service processing policies (for example, task division modes or service traffic modes) have different requirements on a network transmission rate and a transmission delay. Therefore, if QoS configuration information or the like corresponding to an AI task changes, a service processing policy (for example, a task division mode or a service traffic mode) needs to be correspondingly adjusted, so that the service processing policy can adapt to a requirement of a corresponding AI service.

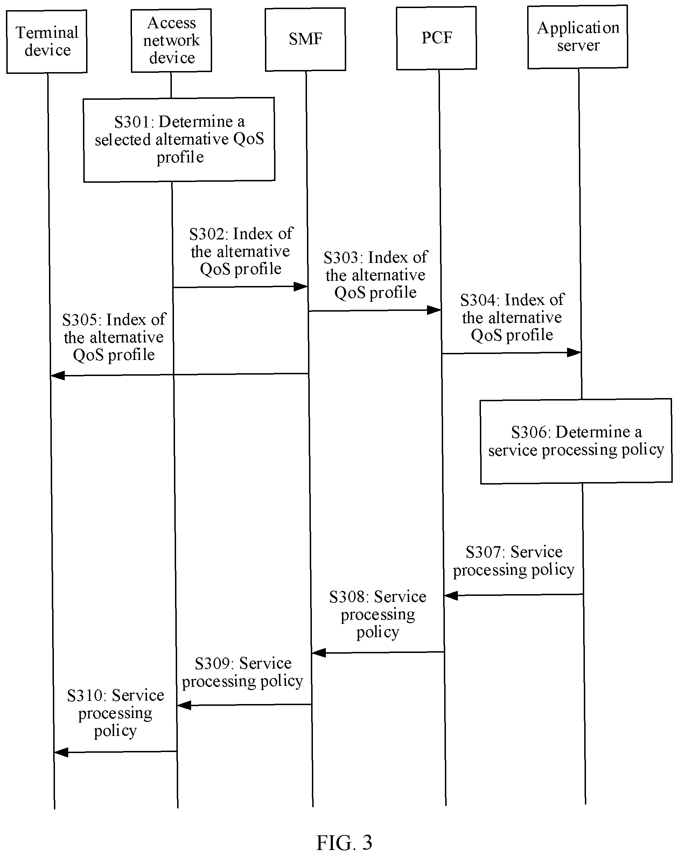

With reference to the scenario shown in FIG. 2, the following describes a manner of adjusting a service processing policy. FIG. 3 is a schematic flowchart of adjusting a service processing policy. FIG. 3 shows steps S301 to S310, which are separately described below.

S301: An access network device determines a selected alternative QoS profile.

When a communication indicator in a normal QoS profile of a QoS flow cannot be met, the access network device may select one alternative QoS profile from one or more alternative QoS profiles, so that the selected alternative QoS profile can be subsequently used to serve the corresponding QoS flow.

S302: The access network device sends an index of the alternative QoS profile to an SMF. Correspondingly, the SMF receives the index of the alternative QoS profile from the access network device.

S303: The SMF sends the index of the alternative QoS profile to a PCF. Correspondingly, the PCF receives the index of the alternative QoS profile from the SMF.

S304: The PCF sends the index of the alternative QoS profile to an application server. Correspondingly, the application server receives the index of the alternative QoS profile from the PCF.

For example, the PCF may send the index of the alternative QoS profile to an AF deployed on the application server.

S305: The SMF sends the index of the alternative QoS profile to a terminal device. Correspondingly, the terminal device receives the index of the alternative QoS profile from the SMF.

S306: The application server determines a service processing policy.

S307: The application server sends the service processing policy to the PCF. Correspondingly, the PCF receives the service processing policy from the application server.

S308: The PCF sends the service processing policy to the SMF. Correspondingly, the SMF receives the service processing policy from the PCF.

S309: The SMF sends the service processing policy to the access network device. Correspondingly, the access network device receives the service processing policy from the SMF.

S310: The access network device sends the service processing policy to the terminal device. Correspondingly, the terminal device receives the service processing policy from the access network device.

It can be learned from FIG. 3 that the access network device needs to notify the application server of the selected alternative QoS profile by using control plane signaling, so that the application server can determine the service processing policy, that is, the application server needs to start to determine the service processing policy only after the QoS profile indicated by the control plane signaling is triggered, and the application server can notify the terminal device of the determined service processing policy, that is, the service processing policy is triggered late. In addition, a path for transmitting the alternative QoS profile by the access network device to the application server (a specific path includes: access network device→SMF→PCF→application server) and a path for receiving the service processing policy by the terminal device from the application server (a specific path includes: application server→PCF→SMF→access network device→terminal device) are long, making the application server and the terminal device adjust the service processing policy later. It can be learned that service processing policy adjustment timeliness needs to be improved currently.

In view of this, embodiments of this application provide a communication method. In the method, a first communication apparatus (for an explanation of the first communication apparatus, reference may be made to the foregoing explanation, and details are not described herein again) may receive traffic-associated information based on a path (for example, a first path) for transmitting a service flow, and determine a service processing policy. Because the service flow is transmitted through a user plane path, the first communication apparatus can receive the traffic-associated information earlier, so that the first communication apparatus triggers determining (or adjustment) of the service processing policy earlier, and the first communication apparatus can directly determine the service processing policy based on the traffic-associated information, thereby simplifying a procedure of triggering the service processing policy, and helping the first communication apparatus adjust the service processing policy earlier. In conclusion, the method can improve service processing policy adjustment timeliness, and help improve service adjustment efficiency.

The communication method provided in embodiments of this application may be applied to the scenario shown in FIG. 1 or FIG. 2. In addition, the method provided in embodiments of this application may be further applied to another possible scenario. For example, the method provided in embodiments of this application may be applied to a long term evolution (long term evolution, LTE) technology, a 5th generation (5th generation, 5G) communication system (for example, new radio (new radio, NR)) system, or a communication system in a future evolution process. This is not specifically limited. The following describes the 5th generation communication system with reference to the accompanying drawings.

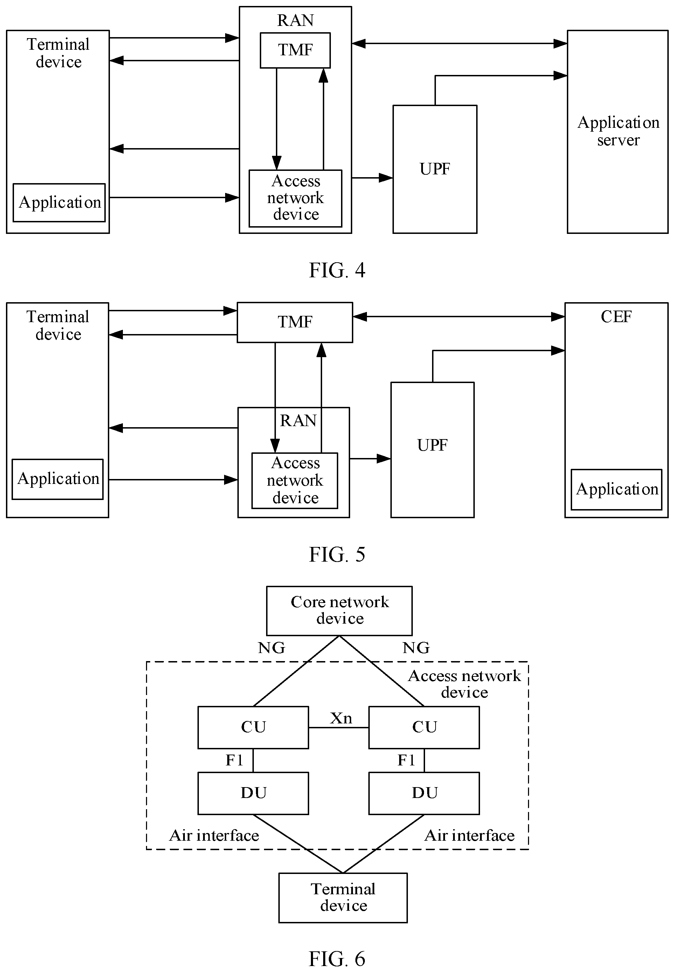

FIG. 4 is a diagram of still another scenario to which an embodiment of this application is applicable. Alternatively, FIG. 4 may be considered as a diagram of an architecture of a communication system, for example, a diagram of an architecture of a 5G communication system. The scenario includes a terminal device, a core network (for example, a RAN), an access network, and an application server. Different from FIG. 2, FIG. 4 further shows that the access network includes a task management function (task management function, TMF), a core network device, and a UPF included in the core network.

The TMF is responsible for accepting a request and scheduling a compute task. FIG. 4 shows that the TMF is deployed on a RAN side. Actually, a manner of deploying the TMF is not limited. For example, the TMF may alternatively be independently deployed relative to the RAN and the core network, or the TMF may be embedded in a DU or a CU in an access network device. Alternatively, for example, the TMF is deployed on a core network side, or the TMF may be a function network element obtained after an existing core network function network element (such as an SMF) is enhanced. This is not specifically limited. The application server is configured to provide a computing service, and may be located in a DN after a core network user plane function. The application server may exchange user plane application layer data with the 5G communication system through an N6 interface.

As shown in FIG. 4, an application is deployed on the terminal device, and the terminal device may access the application server through the application, to implement a service such as a rendering service in collaboration with the application server. The terminal device communicates with the application server sequentially through the RAN and the UPF. The RAN may communicate with the UPF through an NG3 interface.

FIG. 5 is a diagram of yet another scenario according to an embodiment of this application. Alternatively, FIG. 5 may be considered as a diagram of an architecture of a communication system. The scenario shows a terminal device, an access network device, a TMF, a UPF, a computing execution entity (computing execution entity, CEF), and the like. Different from FIG. 4, FIG. 5 further shows the CEF.

For related content of the terminal device, the access network device, the TMF, and the UPF, refer to the content described in FIG. 4. Details are not described herein again. The CEF may be deployed in an application server in a data network, a mobile edge computing (mobile edge computing, MEC) platform, the UPF, the access network device, or the like. This is not specifically limited.

As shown in FIG. 5, an application may be deployed on each of the terminal device and the CEF, and the terminal device may access the CEF sequentially through the RAN and the UPF, to implement a service in collaboration with the CEF.

FIG. 6 is a diagram of a structure of a communication system to which an embodiment of this application is applicable. FIG. 6 shows a core network device, a terminal device, and an access network device. In FIG. 6, the terminal device is, for example, the terminal device in FIG. 1, FIG. 2, FIG. 4, or FIG. 5, the access network device is, for example, the access network device in FIG. 2, FIG. 4, or FIG. 5, and the core network device is, for example, the core network element or the core network device (for example, the UPF) shown in FIG. 2, FIG. 4, or FIG. 5. FIG. 6 further shows a structure of the access network device. Devices in the communication system are connected through an interface (for example, NG or Xn) or an air interface.

The access network device may serve as an independent RAN node, or may include a plurality of RAN nodes, for example, include a CU and a DU. Optionally, the CU may be further split into a CU-CP and a CU-UP. At least one of the access network device, the core network device, the CU in the access network device, the DU in the access network device, the CU-CP in the access network device, or the CU-UP in the access network device in FIG. 6 may be considered as an example of the network device in FIG. 1.

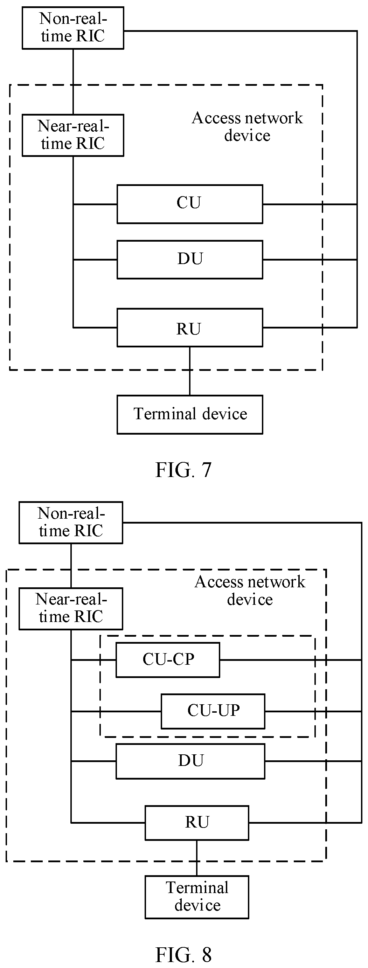

FIG. 7 is a diagram of a structure of a communication system to which an embodiment of this application is applicable. As shown in FIG. 7, the communication system includes a RAN intelligent controller (RAN intelligent controller, RIC), a terminal device, a core network device, and an access network device. In FIG. 7, the terminal device is, for example, the terminal device in FIG. 1, FIG. 2, FIG. 4, FIG. 5, or FIG. 6, the access network device is, for example, the access network device in FIG. 2, FIG. 4, FIG. 5, or FIG. 6, and the core network device is, for example, the core network element (for example, the UPF) shown in FIG. 2, FIG. 4, or FIG. 5 or the core network device shown in FIG. 6. The access network device in FIG. 7 may be considered as an access network device in an O-RAN architecture. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data, and a delay of the data may be at a second level. The real-time RIC mainly processes near-real-time information, for example, delay-sensitive data, and a delay of the data is at a level of tens of milliseconds. Optionally, the near-real-time RIC and the non-real-time RIC each may alternatively be independently deployed as a network element.

The near-real-time RIC may obtain network-side and/or terminal device information from the access network device (for example, at least one of a CU, a DU, and an RU) and/or the terminal device. The access network device in FIG. 7 is, for example, the access network device in FIG. 2, FIG. 4, FIG. 5, or FIG. 6.

Optionally, the near-real-time RIC may process the information, and send a processing result to the RAN node and/or the terminal device. Optionally, the processing result may be exchanged between the CU and the DU and/or between the DU and the RU. For example, the near-real-time RIC delivers the processing result to the DU, and the DU sends the processing result to the RU.

The non-real-time RIC may obtain network-side and/or terminal-side information from the radio access device (for example, at least one of the CU, the DU, and the RU) and/or the terminal device. Optionally, the non-real-time RIC may also process the information, and send a processing result to the RAN node and/or the terminal device. Optionally, the processing result may be exchanged between the CU and the DU and/or between the DU and the RU. For example, the non-real-time RIC delivers the processing result to the DU, and the DU sends the processing result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the access network device (for example, the CU or the DU), and the non-real-time RIC is deployed on an OAM, a cloud server, the core network device, or another network device.

FIG. 8 is a diagram of a structure of a communication system to which an embodiment of this application is applicable. An access network device in FIG. 8 may be considered as another access network device in an O-RAN architecture. Compared with FIG. 7, FIG. 8 shows that a CU is separated into a CU-CP and a CU-UP. For related content of a terminal device and a core network device shown in FIG. 8, refer to the content of the terminal device and the core network device in FIG. 7 respectively. Repeated content is not described again. In FIG. 8, the terminal device is, for example, the terminal device in FIG. 1, FIG. 2, FIG. 4, FIG. 5, FIG. 6, or FIG. 7, the access network device is, for example, the access network device in FIG. 2, FIG. 4, FIG. 5, FIG. 6, or FIG. 7, and the core network device is, for example, the core network element (for example, the UPF) shown in FIG. 2, FIG. 4, or FIG. 5 or the core network device shown in FIG. 6.

The following describes the method provided in embodiments of this application with reference to the accompanying drawings. In the accompanying drawings corresponding to embodiments of this application, all steps represented by dashed lines are optional steps. A first communication apparatus in embodiments of this application is a terminal device, a software module or a hardware module in a terminal device, an application server or a CEF, a software module or a hardware module in an application server or a CEF, a terminal device and an application server, a terminal device and a CEF, or the like. Alternatively, a second communication apparatus in embodiments of this application is an application server or a CEF, a software module or a hardware module in an application server or a CEF, a terminal device, a software module or a hardware module in a terminal device, an application server and a terminal device, a CEF and a terminal device, or the like. A third communication apparatus in embodiments of this application is, for example, an access network device, a TMF, a software or hardware module in an access network device, a software or hardware module in a TMF, or the like. A fourth communication apparatus in embodiments of this application is, for example, an access network device, a software or hardware module in an access network device, a core network device, a software or hardware module in a core network device, or the like. The third communication apparatus may be the same as or different from the fourth communication apparatus. In embodiments of this application, the terminal device may be, for example, the terminal device in any one of FIG. 1, FIG. 2, FIG. 4, and FIG. 5 to FIG. 8; the application server may be, for example, the application server in FIG. 1, FIG. 2, or FIG. 4, or may be a CEF, for example, the CEF in FIG. 5; the TMF is, for example, the TMF in FIG. 4 or FIG. 5; the access network device is, for example, the access network device in any one of FIG. 2 and FIG. 4 to FIG. 8; and the UPF may be, for example, the UPF in FIG. 2, FIG. 4, or FIG. 5.

If the technical solutions provided in embodiments of this application are applied to another communication system, a name, a function, and/or the like of a device may change. This is not limited.

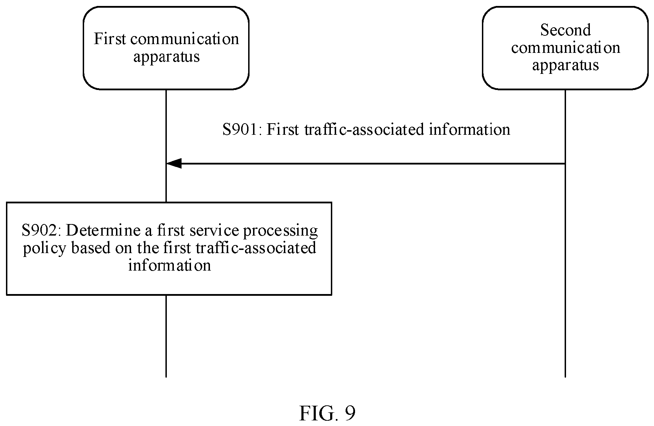

FIG. 9 is a diagram of a communication method according to an embodiment of this application. FIG. 9 includes two steps S901 and S902, which are separately described below.

S901: A second communication apparatus sends first traffic-associated information to a first communication apparatus. Correspondingly, the first communication apparatus receives the first traffic-associated information from the second communication apparatus.

The first traffic-associated information includes experienced (experienced) quality of service information and/or service feature information. Certainly, the first traffic-associated information may further include other information in addition to the quality of service information and/or the service feature information. This is not specifically limited. The experienced quality of service information indicates an actual transmission parameter of a first service flow in historical duration, for example, may specifically indicate an actual transmission parameter of at least one data packet in one or more data packets corresponding to the first service flow in the historical duration. The at least one data packet may be a historical data packet before the first traffic-associated information is sent, or may be a first data packet used to carry the first traffic-associated information, or the like. The historical duration may be duration (or a time period) before a current moment. In some cases, the historical duration may also be described as a historical time period. For example, the historical duration may be duration between a moment at which the first service flow starts to be received and the current moment, or may be duration between a moment at which the first service flow starts to be generated and the current moment, or may be any of duration (or a time period) between a moment at which the first service flow starts to be generated and the current moment. This is not limited in this embodiment of this application. The first service flow corresponds to a first service. The one or more data packets may include service data related to the first service, for example, execution data used to execute a compute task related to the first service. For example, the first service may be a rendering service, and the service data may be, for example, data used to generate a rendering picture.

The following uses an actual transmission parameter of one data packet in the historical duration as an example for description.

The actual transmission parameter of the one data packet in the historical duration may be, for example, a transmission delay (or duration) experienced by the one data packet (which may also be referred to as an experienced transmission delay (experienced delay)), and/or a data transmission rate experienced by the one data packet. The transmission delay experienced by the one data packet may include a sum of transmission delays experienced by the one data packet, and may be at least one of an average value of transmission delays experienced by the one data packet in unit duration, an average value of transmission delays experienced by at least one data packet, or a sum of transmission delays experienced by at least one data packet (or may be described as an accumulated result of transmission delays of at least one data packet obtained through detection). The data transmission rate experienced by the one data packet may also be at least one of an average rate of transmitting the one data packet, a maximum rate of transmitting the one data packet, a minimum rate of transmitting the one data packet, an average rate of transmitting at least one data packet, a maximum rate of transmitting at least one data packet, or an average rate of transmitting at least one data packet.

It should be understood that, as the historical duration changes, a value of the actual transmission parameter of the one data packet in the historical duration may constantly change, for example, change with a transmission process of the one data packet. For example, the first traffic-associated information includes a transmission delay experienced by a data packet D1, the first traffic-associated information is carried in the data packet D1, and a data packet A sequentially passes through a terminal device, an access network device, a UPF, and a CEF. In this case, the transmission delay that is experienced by the data packet D1 and that is indicated by the first traffic-associated information may be 0 milliseconds (ms) on the terminal device, 10 ms on the access network device, 20 ms on the CEF, and the like.

The service feature information indicates an attribute (or a feature) of the first service corresponding to the first service flow, for example, may specifically indicate an importance degree (or referred to as a priority) of the first service and/or an importance (importance) degree (or a priority) of a data packet. Optionally, the service feature information may further indicate a type of the first service, and the like. It should be understood that, because a transmitted data packet constantly changes, an importance degree of a data packet or a service may remain unchanged or may change. An importance degree of a data packet may be related to an importance degree corresponding to a service result correspondingly presented by the data packet. For example, if a data packet corresponds to a key frame used for video rendering, an importance degree of the data packet is high. For another example, if a data packet corresponds to a common frame used for video rendering, an importance degree of the data packet is low.

By analogy, when at least one data packet is a plurality of data packets, the first traffic-associated information may be considered as an accumulated result of traffic-associated information corresponding to the plurality of data packets. It should be understood that the first traffic-associated information is used for description in this embodiment of this application. Actually, the first traffic-associated information may have another name. A name of the first traffic-associated information is not specifically limited in this embodiment of this application.

In a possible implementation, the first traffic-associated information may be transmitted by reusing a first path. In other words, the second communication apparatus separately transmits the first traffic-associated information and the first service flow through the first path. The first path may be a user plane path between the first communication apparatus and the second communication apparatus. The first path may be alternatively described as the user plane path between the first communication apparatus and the second communication apparatus. The first path may indicate two nodes: the first communication apparatus and the second communication apparatus, and may further indicate another node (such as the access network device and/or the UPF) between the first communication apparatus and the second communication apparatus. This is not specifically limited.

For example, some or all data packets in the one or more data packets of the first service flow are transmitted through the first path, and the second communication apparatus may reuse the first path to separately send the first traffic-associated information to the first communication apparatus.

Optionally, the second communication apparatus may periodically send the first traffic-associated information, or the second communication apparatus may send the first traffic-associated information under a specific condition. The specific condition may be, for example, that a communication quality change value is greater than a first change value, and the first change value may be preconfigured or predefined in the second communication apparatus. This is not specifically limited. To facilitate identification of a data packet whose actual transmission parameter is correspondingly indicated by the first traffic-associated information, the first traffic-associated information may carry an identifier of at least one data packet.

In this implementation, a transmission manner of the first traffic-associated information and a transmission manner of the data packet corresponding to the first service flow may be different or the same. The transmission manner includes, for example, a transport protocol.

For example, the second communication apparatus may transmit the one or more data packets by using a transport layer protocol such as a real-time transport protocol (real-time transport protocol, RTP), a user datagram protocol internet connection (quick user datagram protocol internet connection, QUIC), or a real-time transport control protocol (real-time transport control protocol, RTCP). Alternatively, the second communication apparatus may transmit the first traffic-associated information by using RTP, QUIC, or RTCP.

In the foregoing implementation, because the first service flow and the first traffic-associated information are separately transmitted, mutual impact between the first service flow and the first traffic-associated information can be reduced, thereby helping improve reliability of exchanging the first traffic-associated information between the first communication apparatus and the second communication apparatus.

In another possible implementation, the first traffic-associated information is carried in at least one data packet in the one or more data packets of the first service flow. This is equivalent to that the second communication apparatus simultaneously transmits the first traffic-associated information and the data packet of the first service flow.

For example, the second communication apparatus may periodically include the first traffic-associated information in the at least one data packet, or the second communication apparatus may include the first traffic-associated information in each of the at least one data packet, or when a communication quality change value is greater than a first change value, the second communication apparatus may include the first traffic-associated information in a to-be-sent data packet. This is not specifically limited.

Including the first traffic-associated information in the data packet of the first service flow can reduce a number of interactions between the first communication apparatus and the second communication apparatus. Because data is transmitted between the first communication apparatus and the second communication apparatus in real time, including the first traffic-associated information in first data can further improve timeliness of obtaining the first traffic-associated information by the second communication apparatus.

In this implementation, the transmission manner of the first traffic-associated information and the transmission manner of the data packet corresponding to the first service flow may be the same.

In a possible design, the second communication apparatus may transmit at least one data packet by using a transport layer protocol such as RTP, QUIC, or RTCP. In this case, optionally, the first traffic-associated information may be carried in an RTP header, a QUIC header, or an RTCP header used to transmit the at least one data packet. This can relatively reduce transmission overheads, and can help the first communication apparatus obtain the first traffic-associated information earlier based on the RTP header, the QUIC header, or the RTCP header.

The following describes content of transmitting the first traffic-associated information in different implementations of the first communication apparatus and the second communication apparatus in different cases.

Case 1: If the first communication apparatus is a terminal device, and the second communication apparatus is an application server or a CEF, the application server or the CEF may send the first traffic-associated information to the terminal device. Correspondingly, the terminal device may receive the first traffic-associated information from the application server or the CEF. In this case, the application server or the CEF may directly send the first traffic-associated information to the terminal device, or the application server or the CEF may send the first traffic-associated information to the terminal device sequentially through the UPF and the RAN. In this embodiment of this application, a node that a path for sending the first traffic-associated information passes through is not limited, that is, a specific node that the first path passes through is not limited. For implementations of the terminal device, the application server, and the CEF, refer to the foregoing content. Details are not described herein again. In Case 1, the first path (or the user plane path between the first communication apparatus and the second communication apparatus) may include (or sequentially include) a transmission path between the terminal device and the access network device (for example, a Uu interface transmission path between the terminal device and the access network device), a transmission path between the access network device and the UPF (for example, an NG3 interface transmission path between the access network device and the UPF), and a transmission path between the UPF and the application service (for example, an N6 interface transmission path between the UPF and the application service).

Case 2: If the first communication apparatus is an application server or a CEF, and the second communication apparatus is a terminal device, the terminal device may send the first traffic-associated information to the application server or the CEF. Correspondingly, the application server or the CEF may receive the first traffic-associated information from the terminal device. In this case, the terminal device may directly send the first traffic-associated information to the application server or the CEF, or the terminal device may send the first traffic-associated information to the application server or the CEF sequentially through the RAN and the UPF. In this embodiment of this application, a node that a specific path for sending the first traffic-associated information by the terminal device passes through is not limited, that is, a specific node that the first path passes through is not limited. In Case 1, the first path (or the user plane path between the first communication apparatus and the second communication apparatus) may include (or sequentially include) a transmission path between the application server and the UPF (for example, an N6 interface transmission path between the application service and the UPF), a transmission path between the UPF and the access network device (for example, an NG3 interface transmission path between the UPF and the access network device), and a transmission path between the access network device and the terminal device (for example, a Uu interface transmission path between the access network device and the terminal device).

S902: The first communication apparatus determines a first service processing policy based on the first traffic-associated information.

The first service processing policy may be considered as a (re)selected service processing policy of the first service, an updated service processing policy of the first service, or an adjusted service processing policy of the first service. The first service processing policy indicates a processing manner of the first service, and specifically includes service indicator information and/or task allocation information of the first service. The service indicator information refers to some performance that can be implemented by the first service. The task allocation information may indicate a task allocated to the first communication apparatus and/or the second communication apparatus, and specifically includes at least one subtask included in a first task allocated to the first communication apparatus and/or at least one subtask included in the first task allocated to the second communication apparatus. The first task is at least one task for implementing the first service, and the first task may be divided into a plurality of subtasks. For example, the first service processing policy may indicate the CEF to enable a DDGI or reflection rendering function, the CEF to disable a DDGI or reflection rendering function, the CEF to enable a DDGI or reflection rendering function and the terminal device to disable the DDGI or reflection rendering function, or the CEF to disable a DDGI or reflection rendering function and the terminal device to enable the DDGI or reflection rendering function.

There are a plurality of manners in which the first communication apparatus determines the first service processing policy based on the first traffic-associated information. The following provides descriptions with reference to a manner shown in A1 or A2.

A1: The first communication apparatus determines first alternative quality of service configuration information based on the first traffic-associated information, and determines the first service processing policy based on the first alternative quality of service configuration information.

The first alternative QoS configuration information may be one piece of alternative QoS configuration information in one or more pieces of alternative QoS configuration information of the first service flow, and may be considered as QoS configuration information selected by the first service flow, updated QoS configuration information, or adjusted QoS configuration information. The first alternative QoS configuration information indicates one or more communication indicators that the first service flow needs to meet. The first alternative QoS configuration information may include, for example, an alternative QoS profile of the first service flow. For content of the alternative QoS profile of the first service flow, refer to the foregoing content. Optionally, the first alternative QoS configuration information further includes an alternative QoS parameter, resource requirement information, and/or the like corresponding to each of the plurality of subtasks corresponding to the first task.

The following first describes a manner in which the first communication apparatus determines the first alternative QoS configuration information based on the first traffic-associated information in A1.

For example, the first communication apparatus may obtain the first alternative QoS configuration information from the access network device. Alternatively, the first communication apparatus may determine the first alternative QoS configuration information based on the first traffic-associated information and a second association relationship. For example, the first communication apparatus may determine, as the first alternative QoS configuration information, alternative QoS configuration information that matches the first traffic-associated information in the second association relationship. The second association relationship may be preconfigured or predefined in the first communication apparatus, for example, preconfigured in the first communication apparatus by using a protocol, or may be received by the first communication apparatus from another apparatus. The another apparatus is, for example, a third communication apparatus.

The second association relationship indicates an association relationship between one or more pieces of traffic-associated information and the one or more pieces of alternative QoS configuration information. For example, the second association relationship includes an association relationship between the one or more pieces of traffic-associated information and identifiers of the one or more pieces of alternative QoS configuration information, or includes an association relationship between identifiers of the one or more pieces of traffic-associated information and the one or more pieces of alternative QoS configuration information, or includes an association relationship between identifiers of the one or more pieces of traffic-associated information and identifiers of the one or more pieces of alternative QoS configuration information. A specific form of the second association relationship is not limited in this embodiment of this application.

It should be understood that the one or more pieces of traffic-associated information may be in one-to-one correspondence with the one or more pieces of alternative QoS configuration information in the second association relationship. For example, each piece of traffic-associated information in the one or more pieces of traffic-associated information is associated with one piece of alternative QoS configuration information in the one or more pieces of alternative QoS configuration information in the second association relationship. Alternatively, the one or more pieces of traffic-associated information may be in many-to-one correspondence with the one or more pieces of alternative QoS configuration information in the second association relationship. For example, a plurality of pieces of traffic-associated information in the one or more pieces of traffic-associated information are associated with one piece of alternative QoS configuration information in the one or more pieces of alternative QoS configuration information in the second association relationship. Alternatively, the one or more pieces of traffic-associated information are in one-to-one correspondence and many-to-one correspondence with the one or more pieces of alternative QoS configuration information in the second association relationship. This is not specifically limited.

An identifier of one piece of traffic-associated information in the identifiers of the one or more pieces of traffic-associated information may be an index, a number, or the like allocated to the one piece of traffic-associated information, or may be values of some or all of actual transmission parameters indicated by the one piece of traffic-associated information, or may be a value range to which values of some or all of actual transmission parameters indicated by the one piece of traffic-associated information belong, or may be an index corresponding to a value range to which values of some or all of actual transmission parameters indicated by the one piece of traffic-associated information belong, or may be a value of an importance degree of data indicated by the one piece of traffic-associated information. This is not limited in this embodiment of this application.

An identifier of one piece of alternative QoS configuration information in the identifiers of the one or more pieces of alternative QoS configuration information may be at least one of an identifier/index of a service flow corresponding to the one piece of alternative QoS configuration information, an index/identifier of the one piece of alternative QoS configuration information, or an identifier/index of at least one communication indicator in one or more communication indicators indicated by the one piece of alternative QoS configuration information. The identifier of the service flow may be a combination of at least one of a data radio bearer identifier (data radio bearer identifier, DRB ID), a logical channel identifier (logical channel identifier, LCID), a session ID, or a service flow ID mapped to an air interface on which the service flow is located. A session is, for example, a PDU session. The identifier/index of the at least one communication indicator may be represented by a value of the at least one communication indicator, a value range to which a value of the at least one communication indicator belongs, a number, a sequence number, or the like. This is not limited. One piece of alternative QoS configuration information may include communication-related information and/or computing-related information, and an identifier of the one piece of alternative QoS configuration information may be represented by content indicated by the communication-related information or content indicated by the computing-related information included in the alternative QoS configuration information. The content indicated by the communication-related information includes, for example, QoS such as an input/output data throughput, a PDB, or a GBR. The content indicated by the computing-related information includes, for example, at least one of a computing type, a computation amount requirement, a computing energy consumption requirement, or a computing delay requirement.

Table 1 is an example of the second association relationship provided in this embodiment of this application. Table 1 is described by using an example in which traffic-associated information indicated by the second association relationship includes a value range to which a transmission delay X experienced by a data packet belongs and alternative QoS configuration information includes a value of a PDB.

**Table 1**

| Traffic-associated information (transmission delay X experienced by a data packet) | Alternative QoS configuration information |
|---|---|
| X≤5 milliseconds (ms) | 1 (PDB=20 ms) |
| 5 ms<X≤15 ms | 2 (PDB=10 ms) |
| 15 ms<X≤20 ms | 3 (PDB=5 ms) |

For the second association relationship shown in Table 1, if traffic-associated information indicates that a transmission delay X experienced by a data packet is less than or equal to 5 ms, the traffic-associated information corresponds to alternative QoS configuration information 1, and a PDB corresponding to the alternative QoS configuration information 1 is 20 ms; if traffic-associated information indicates that a transmission delay X experienced by a data packet is less than 5 ms and less than or equal to 15 ms, the traffic-associated information corresponds to alternative QoS configuration information 2, and a PDB corresponding to the alternative QoS configuration information 2 is 10 ms; and if traffic-associated information indicates that a transmission delay X experienced by a data packet is greater than 15 ms and less than or equal to 20 ms, the traffic-associated information corresponds to alternative QoS configuration information 3, and a PDB corresponding to the alternative QoS configuration information 3 is 5 ms. For example, if the first communication apparatus determines that a transmission delay X that is experienced by a data packet and that indicated by the first traffic-associated information is 8 ms, the first communication apparatus may determine the alternative QoS configuration information 1 as the first alternative QoS configuration information. In this way, network resources occupied by a data packet are reduced as much as possible while a data packet transmission delay requirement is ensured.

Table 2 is an example of the second association relationship provided in this embodiment of this application. Table 2 is described by using an example in which traffic-associated information indicated by the second association relationship includes a value range to which a transmission delay X experienced by a data packet belongs and alternative QoS configuration information includes a computing delay requirement.

**Table 2**

| Traffic-associated information (transmission delay X experienced by a data packet) | Alternative QoS configuration information |
|---|---|
| X≤20 ms | 1 (computing delay requirement=20 ms) |
| X>20 | 2 (computing delay requirement=10 ms) |

For the second association relationship shown in Table 2, if traffic-associated information indicates that a transmission delay X experienced by a data packet is less than or equal to 20 ms, the traffic-associated information corresponds to alternative QoS configuration information 1, and a computing delay requirement corresponding to the alternative QoS configuration information 1 is 20 ms; and if traffic-associated information indicates that a transmission delay X experienced by a data packet is greater than 20 ms, the traffic-associated information corresponds to alternative QoS configuration information 2, and a computing delay requirement corresponding to the alternative QoS configuration information 2 is 10 ms. For example, if the first communication apparatus determines that a transmission delay X experienced by a data packet indicated by the first traffic-associated information is 15 ms, the first communication apparatus may determine the alternative QoS configuration information 1 as the first alternative QoS configuration information. On the premise that a delay constraint of a data packet from an end (for example, the terminal device) to an end (for example, the CEF) is met, compute resources occupied by the data packet are reduced as much as possible.

Table 3 is an example of the second association relationship provided in this embodiment of this application. Table 3 is described by using an example in which traffic-associated information indicated by the second association relationship includes an importance degree of a data packet and alternative QoS configuration information includes a PDB.

**Table 3**

| Importance degree of a data packet | Alternative QoS configuration information |
|---|---|
| Low (low) | 1 (PDB=15 ms) |
| Medium (medium) | 2 (PDB=10 ms) |
| High (high) | 3 (PDB=5 ms) |

For the second association relationship shown in Table 3, if an importance degree of a data packet is low, a PDB indicated by alternative QoS configuration information is 15 ms; if an importance degree of a data packet is medium, a PDB indicated by alternative QoS configuration information is 10 ms; and if an importance degree of a data packet is high, a PDB indicated by alternative QoS configuration information is 5 ms. For example, if the first communication apparatus detects that an importance degree of a data packet is low, the first communication apparatus may select the alternative QoS configuration information with the PDB of 5 ms. In this way, a data packet transmission delay requirement is met, and network resources occupied by a data packet can be further reduced.

Table 4 is an example of the second association relationship provided in this embodiment of this application. Table 4 is described by using an example in which traffic-associated information indicated by the second association relationship includes an importance degree of a data packet and alternative QoS configuration information includes a computing delay requirement.

**Table 4**

| Importance degree of a data packet | Alternative QoS configuration information |
|---|---|
| Low (low) | 1 (computing delay requirement=30 ms) |
| Medium (medium) | 2 (computing delay requirement=20 ms) |
| High (high) | 3 (computing delay requirement=10 ms) |

For the second association relationship shown in Table 4, if an importance degree of a data packet is low, a computing delay requirement indicated by alternative QoS configuration information is 30 ms; if an importance degree of a data packet is medium, a computing delay requirement indicated by alternative QoS configuration information is 20 ms; and if an importance degree of a data packet is high, a computing delay requirement indicated by alternative QoS configuration information is 10 ms. For example, if the first communication apparatus detects that an importance degree of a data packet is low, the first communication apparatus may select the alternative QoS configuration information with the computing delay requirement of 30 ms. In this way, on the premise that an end-to-end delay constraint of an unimportant data packet is met, compute resources occupied by the data packet are reduced as much as possible.

Certainly, Table 1 to Table 4 are examples of the second association relationship. Actually, content and a form of the second association relationship are not limited. In addition, Table 1 to Table 4 present the second association relationship in tables. Actually, there may be a plurality of forms of the second association relationship, for example, a function relationship or another form. This is not specifically limited. In addition, an association relationship in embodiments of this application may also be referred to as a correspondence, a relationship, or the like. This is not specifically limited.

In a possible implementation, when the second association relationship is matched with the first traffic-associated information, in the second association relationship, traffic-associated information corresponding to alternative QoS configuration information in descending order of priorities is matched with the first traffic-associated information. In this way, alternative QoS configuration information of a higher priority may be preferentially obtained through screening. Priorities of the one or more pieces of alternative QoS configuration information may be preconfigured or predefined in the first communication apparatus, for example, may be preconfigured in the first communication apparatus by using a protocol, or may be determined based on second indication information. The second indication information indicates the second association relationship. The second indication information may be, for example, received by the first communication apparatus from another apparatus (for example, the access network device). For example, the second association relationship is in a form of a table, and alternative QoS configuration information indicated earlier in the table has a higher priority than alternative QoS configuration information indicated later in the table.

In a possible implementation, the first communication apparatus further determines that the first alternative QoS configuration information matches network status information. In other words, the first alternative QoS configuration information may be determined based on the first traffic-associated information, the second association relationship, and the network status information. It may be understood that the first alternative QoS configuration information can match the network status information, or the first alternative QoS configuration information can meet the network status information.

That the first alternative QoS configuration information can match the network status information may be understood as that the network status information can reach or meet the first alternative QoS configuration information, specifically, for example, some or all communication indicators in one or more communication indicators corresponding to the network status information can meet some or all communication indicators in the one or more communication indicators indicated by the first alternative QoS configuration information.

For example, the one or more communication indicators indicated by the network status information include a GFBR, a PDB, and a PER, and the one or more communication indicators indicated by the first alternative QoS configuration information include a GFBR, a PDB, and a PER. That the first alternative QoS configuration information can match the network status information may be that the GFBR indicated by the network communication status can be greater than or equal to the GFBR indicated by the first alternative QoS configuration information, the PDB indicated by the network communication status can be less than or equal to the PDB indicated by the first alternative QoS configuration information, and the PER indicated by the network communication status can be less than or equal to the PER indicated by the first alternative QoS configuration information.

For example, the alternative QoS configuration information 1 indicates that a packet error rate is 0.5%. The first communication apparatus determines that a current packet error rate indicated by the network status information is 0.45%. Because the packet error rate indicated by the network status information is less than the packet error rate indicated by the alternative configuration QoS configuration information 1, the first communication apparatus may determine that the alternative QoS configuration information 1 matches the network status information.

In a possible implementation, the first communication apparatus further determines that the first alternative QoS configuration information matches resource status information of the first communication apparatus and/or the second communication apparatus. In other words, the first alternative QoS configuration information may be determined based on the first traffic-associated information, the second association relationship, and the resource status information. It may be understood that the first alternative QoS configuration information can match the resource status information, or the first alternative QoS configuration information can meet the resource status information. The resource status information may indicate resource usage of the first communication apparatus and/or resource usage of the second communication apparatus. Therefore, the first communication apparatus may determine information about a remaining available resource (for example, a number of resources and/or types of the resources) of the first communication apparatus and/or information about a remaining available resource of the second communication apparatus based on the resource status information. The first alternative QoS configuration information may indicate resource requirement information of a task corresponding to the first service, for example, may indicate a number of resources and/or types of the resources required by the task corresponding to the first service.

That the first alternative QoS configuration information matches the resource status information may be understood as that the information about the remaining resource of the first communication apparatus and/or the information about the remaining resource of the second communication apparatus can reach or meet the first alternative QoS configuration information, specifically, for example, a number of remaining resources of the first communication apparatus and/or a number of remaining resources of the second communication apparatus can be greater than or equal to the number, indicated by the first alternative QoS configuration information, of resources correspondingly required by the first service, and/or types of the remaining resources of the first communication apparatus and/or types of the remaining resources of the second communication apparatus include the types, indicated by the first alternative QoS configuration information, of the resources correspondingly required by the first service.

It should be understood that the first alternative QoS configuration information may alternatively match both the network status information and the resource status information of the first communication apparatus and/or the second communication apparatus. This is not specifically limited.

After the first communication apparatus determines the first alternative QoS configuration information based on the first traffic-associated information, the first communication apparatus may determine the first service processing policy based on the first alternative QoS configuration information.

For example, the first communication apparatus may determine the first service processing policy based on the first alternative QoS configuration information and a first association relationship. For example, the first communication apparatus may determine, as the first service processing policy, a service processing policy that matches the first alternative QoS configuration information in the first association relationship. The first association relationship may be preconfigured or predefined in the first communication apparatus, for example, preconfigured in the first communication apparatus by using a protocol, or may be determined based on first indication information. The first indication information may be received by the first communication apparatus from another apparatus. The first indication information indicates the first association relationship. The another apparatus is, for example, the third communication apparatus or the second communication apparatus. The third communication apparatus is, for example, an access network device, a TMF, a software or hardware module in an access network device, or a software or hardware module in a TMF. This is not specifically limited. For an implementation of the access network device or the TMF, refer to the foregoing descriptions. Details are not described herein again.

The first association relationship indicates an association relationship between the one or more pieces of alternative QoS configuration information and one or more service processing policies. For example, the first association relationship includes an association relationship between the one or more pieces of alternative QoS configuration information and identifiers of the one or more service processing policies, or includes an association relationship between identifiers of the one or more pieces of alternative QoS configuration information and the one or more service processing policies, or includes an association relationship between identifiers of the one or more pieces of alternative QoS configuration information and identifiers of the one or more service processing policies. Specific content of the first association relationship is not limited in this embodiment of this application. For content of the identifiers of the one or more pieces of alternative QoS configuration information, refer to the foregoing content. Repeated content is not described again. It should be understood that the one or more pieces of alternative QoS configuration information may be in one-to-one correspondence, or may be in many-to-one correspondence, or may be in one-to-one correspondence and many-to-one correspondence with the one or more service processing policies in the first association relationship. This is not specifically limited. One piece of alternative QoS configuration information may include a plurality of pieces of information, and an identifier of the one piece of alternative QoS configuration information may be represented by content indicated by computing-related information included in the one piece of alternative QoS configuration information.

For example, Table 5 is an example of the first association relationship provided in this embodiment of this application. Table 5 is described by using an example in which alternative QoS configuration information indicated by the first association relationship includes a computing delay requirement and a service processing policy includes a service processing policy of the first communication apparatus and/or the second communication apparatus.

**Table 5**

| Alternative QoS configuration information | Service processing policy |
|---|---|
| 1 (computing delay requirement=10 ms) | Disable (OFF) DDGI |
| 2 (computing delay requirement=20 ms) | Keep unchanged |
| 3 (computing delay requirement=30 ms) | Enable (ON) DDGI |

As shown in Table 5, if alternative QoS configuration information is 1, and the alternative QoS configuration information indicates that a computing delay requirement is 10 ms, a corresponding service policy indicates to disable DDGI; if alternative QoS configuration information is 2, and the alternative QoS configuration information indicates that a computing delay requirement is 20 ms, a corresponding service policy indicates to keep the service policy unchanged; and if alternative QoS configuration information is 3, and the alternative QoS configuration information indicates that a computing delay requirement is 30 ms, a corresponding service policy indicates to enable DDGI. For example, if the first communication apparatus determines that the first alternative QoS configuration is the alternative QoS configuration information 1, the first communication apparatus may determine that the service processing policy indicates to disable DDGI.

For example, Table 6 is an example of the first association relationship provided in this embodiment of this application. Table 5 is described by using an example in which alternative QoS configuration information indicated by the first association relationship includes a computing delay requirement and a service processing policy includes a service processing policy of the first communication apparatus and the second communication apparatus.

**Table 6**

| Alternative QoS configuration information | Service processing policy |
|---|---|
| 1 (computing delay requirement=30 ms) | The first communication apparatus enables DDGI, and the second communication apparatus disables DDGI |
| 2 (computing delay requirement=20 ms) | The first communication apparatus disables DDGI, and the second communication apparatus disables DDGI |

As shown in Table 6, if alternative QoS configuration information is 1, and the alternative QoS configuration information indicates that a computing delay requirement is 30 ms, a corresponding service policy indicates the first communication apparatus to enable DDGI and the second communication apparatus to disable DDGI; and if alternative QoS configuration information is 2, and the alternative QoS configuration information indicates that a computing delay requirement is 20 ms, a corresponding service policy indicates the first communication apparatus to disable DDGI and the second communication apparatus to disable DDGI. For example, if the first communication apparatus determines that the first alternative QoS configuration is the alternative QoS configuration information 2, the first communication apparatus may determine that the service processing policy indicates the first communication apparatus and the second communication apparatus to disable DDGI.

It should be understood that Table 5 and Table 6 are examples of the first association relationship. Actually, a specific form of the first association relationship is not limited. For example, the first association relationship may be alternatively represented in a function or another form.

A2: The first communication apparatus determines the first service processing policy based on the first traffic-associated information and a third association relationship. For example, the first communication apparatus may determine, as the first service processing policy, a service processing policy that matches the first traffic-associated information in the third association relationship. The third association relationship may be preconfigured or predefined in the first communication apparatus, for example, preconfigured in the first communication apparatus by using a protocol, or may be received by the first communication apparatus from another apparatus. The another apparatus is, for example, a third communication apparatus. The third communication apparatus is, for example, an access network device, a TMF, a software or hardware module in an access network device, or a software or hardware module in a TMF. This is not specifically limited. For an implementation of the access network device or the TMF, refer to the foregoing descriptions. Details are not described herein again.

The third association relationship indicates an association relationship between one or more pieces of traffic-associated information and one or more service processing policies. For example, the third association relationship includes an association relationship between the one or more pieces of traffic-associated information and identifiers of the one or more service processing policies, or includes an association relationship between identifiers of the one or more pieces of traffic-associated information and the one or more service processing policies, or includes an association relationship between identifiers of the one or more pieces of traffic-associated information and identifiers of the one or more service processing policies. Specific content of the first association relationship is not limited in this embodiment of this application. It should be understood that the one or more pieces of traffic-associated information may be in one-to-one correspondence, or may be in many-to-one correspondence, or may be in one-to-one correspondence and many-to-one correspondence with the one or more service processing policies in the first association relationship. This is not specifically limited.

In a possible implementation, the third association relationship may alternatively indicate an association relationship between one or more pieces of traffic-associated information and one or more pieces of QoS configuration information. For the association relationship between the one or more pieces of traffic-associated information and the one or more pieces of QoS configuration information, refer to the foregoing content of the second association relationship. Repeated content is not described again.

Table 7 is an example of the third association relationship provided in this embodiment of this application. Table 6 is described by using an example in which traffic-associated information indicated by the third association relationship includes a transmission delay X experienced by a data packet and a service processing policy includes a service processing policy of the first communication apparatus and/or the second communication apparatus.

**Table 7**

| Traffic-associated information (transmission delay X experienced by a data packet) | Service processing policy |
|---|---|
| X≤20 ms | Disable DDGI |
| X>20 ms | Enable DDGI |

As shown in Table 7, if traffic-associated information indicates that a computing delay requirement X is less than or equal to 20 ms, a corresponding service policy indicates to disable DDGI; and if traffic-associated information indicates that a computing delay requirement X is greater than 20 ms. For example, if the first communication apparatus determines, based on the first traffic-associated information, that a transmission delay experienced by a data packet is 30 ms, the first communication apparatus may determine that a service processing policy indicates to enable DDGI.

Table 8 is an example of the third association relationship provided in this embodiment of this application.

**Table 8**

| Importance degree of a data packet | Alternative QoS configuration information | Service processing policy |
|---|---|---|
| Low | 1 (computing delay requirement=30 ms) | Disable DDGI |
| Medium | 2 (computing delay requirement=20 ms) | Keep unchanged |
| High | 3 (computing delay requirement=10 ms) | Enable DDGI |

As shown in Table 8, if traffic-associated information indicates that an importance degree of a data packet is low, a corresponding service policy indicates to disable DDGI; if traffic-associated information indicates that an importance degree of a data packet is medium, a corresponding service policy indicates to keep the service processing policy unchanged; and if traffic-associated information indicates that an importance degree of a data packet is high, a corresponding service policy indicates to enable DDGI. For example, if the first communication apparatus determines, based on the first traffic-associated information, that an importance degree of a data packet is medium, the first communication apparatus may determine that the service processing policy indicates to keep the service processing policy unchanged.

It should be understood that Table 7 and Table 8 are examples of the third association relationship. Actually, a specific form of the third association relationship is not limited. For example, the third association relationship may be alternatively represented in a function or another form.

Optionally, the first communication apparatus may adjust the processing manner of the first service and the like based on the first service processing policy.

For example, if the first service processing policy includes the task allocation information, the first communication apparatus may adjust a task for processing the first service by the first communication apparatus; and/or if the first service processing policy includes the service indicator information, and the service indicator information includes at least one of a frame rate, a bit rate, or a resolution corresponding to the first service, the first communication apparatus may adjust, based on the service indicator information, at least one of the frame rate, the bit rate, or the resolution corresponding to the first service.

For example, if the task allocation information included in the first service processing policy indicates the first communication apparatus to disable DDGI, the first communication apparatus may disable DDGI based on the task allocation information. Alternatively, if the service indicator information included in the first service processing policy indicates that the frame rate is 30 FPS, the first communication apparatus may adjust the frame rate to 30 FPS based on the service indicator information.

In a possible implementation, when the first service processing policy further indicates information about a resource allocated to the first task, the first communication apparatus may adjust, based on the information about the resource allocated to the first task, the resource allocated to the first task. In another possible implementation, the first communication apparatus may determine (or adjust), based on the first alternative QoS configuration information, the information about the resource allocated to the first task, so that the determined information about the resource allocated to the first task can meet a requirement corresponding to the first alternative QoS configuration information.

For example, the first alternative QoS configuration information indicates that the computing delay requirement is 10 ms (that is, the computing delay requirement is high). In this case, the first communication apparatus may add five CPUs for the first task, thereby reducing a delay of processing the first task.

When the first service needs to be collaboratively processed by the first communication apparatus and the second communication apparatus, the second communication apparatus may also adjust the processing manner of the first service. With reference to a method shown in any one of B1 to B3, the following describes a manner in which the second communication apparatus adjusts the processing manner of the first service.

B1: The second communication apparatus may determine the first service processing policy by itself, and the second communication apparatus adjusts the processing manner of the first service based on the first service processing policy. For content of adjusting the processing manner of the first service by the second communication apparatus based on the first traffic-associated information, refer to the foregoing content of adjusting the processing manner of the first service by the first communication apparatus. Repeated content is not described again.

For example, for a manner in which the second communication apparatus determines the first service processing policy, refer to the content in which the first communication apparatus determines the first service processing policy. Repeated content is not described again. In addition, the second communication apparatus may further obtain the first alternative QoS configuration information from the first communication apparatus, and determine the first service processing policy based on the first alternative QoS configuration information. Optionally, the first communication apparatus may send first information to the second communication apparatus through an application layer, where the first information may include an identifier (or an index) of the first alternative QoS configuration information; or may send first information to the second communication apparatus through an access network device, a UPF, or the like. This is not specifically limited.

For example, the second communication apparatus may determine the first service processing policy based on the first alternative QoS configuration information and a first association relationship. For content of the first association relationship, refer to the foregoing content of the first association relationship. In addition, the second communication apparatus may preconfigure or predefine the first association relationship, or may obtain the first association relationship from the first communication apparatus or the third communication apparatus. This is not specifically limited.

For example, the first association relationship is the first association relationship shown in Table 5, the first communication apparatus is a terminal device, and the second communication apparatus is a CEF. The terminal device selects alternative QoS configuration information (that is, the alternative QoS configuration information 2) with a computing delay requirement of 20 ms. In this case, the terminal device may notify the CEF of the alternative QoS configuration information 2 by using the first information, and the CEF determines, based on the first association relationship shown in Table 6, that the service processing policy corresponding to the alternative QoS configuration information 2 is that the CEF enables the DDGI rendering function. Correspondingly, the CEF may enable the DDGI rendering function.

B2: The second communication apparatus may receive second information from the first communication apparatus, and determine the first service processing policy.

After determining the first service processing policy, the first communication apparatus may send the second information to the second communication apparatus, where the second information indicates the first service processing policy, for example, may include an identifier of the first service processing policy. The first communication apparatus may send the second information to the second communication apparatus through an application layer, or may send the second information to the second communication apparatus through an access network device, a UPF, or the like. This is not specifically limited. In this way, the second communication apparatus may also adjust the processing manner of the first service based on the first service processing policy. For content of adjusting the processing manner of the first service by the second communication apparatus, refer to the foregoing content of adjusting the processing manner of the first service by the first communication apparatus. Repeated content is not described again.

For example, if the task allocation information included in the first service processing policy indicates the first communication apparatus to enable DDGI and the second communication apparatus to disable DDGI, the first communication apparatus sends the second information to the second communication apparatus, where the second information indicates the first communication apparatus to enable DDGI and the second communication apparatus to disable DDGI.

B3: After determining the first service processing policy, the first communication apparatus may determine content that needs to be adjusted by the second communication apparatus, and send third information to the second communication apparatus, where the third information indicates the content that needs to be adjusted by the second communication apparatus. Different from the second information, the third information is equivalent to directly indicating adjustment that needs to be performed by the second communication apparatus. For a manner of sending the third information by the first communication apparatus, refer to the foregoing content of sending the second information. Repeated content is not described again. In this way, after receiving the third information, the second communication apparatus may directly adjust the processing manner of the first service, thereby helping improve efficiency of adjusting the processing manner of the first service by the second communication apparatus.

For example, if the task allocation information included in the first service processing policy indicates the first communication apparatus to enable DDGI and the second communication apparatus to disable DDGI, the first communication apparatus sends the third information to the second communication apparatus, where the third information indicates the second communication apparatus to disable DDGI.

In this embodiment of this application, the first communication apparatus may quickly and flexibly adjust the service processing policy based on the first traffic-associated information, thereby ensuring service processing effect, reducing a case in which the first communication apparatus and the second communication apparatus exchange invalid data to process a service, and helping save resources. In addition, the first communication apparatus may determine the first service processing policy in a plurality of manners, thereby enriching manners of determining the service processing policy.

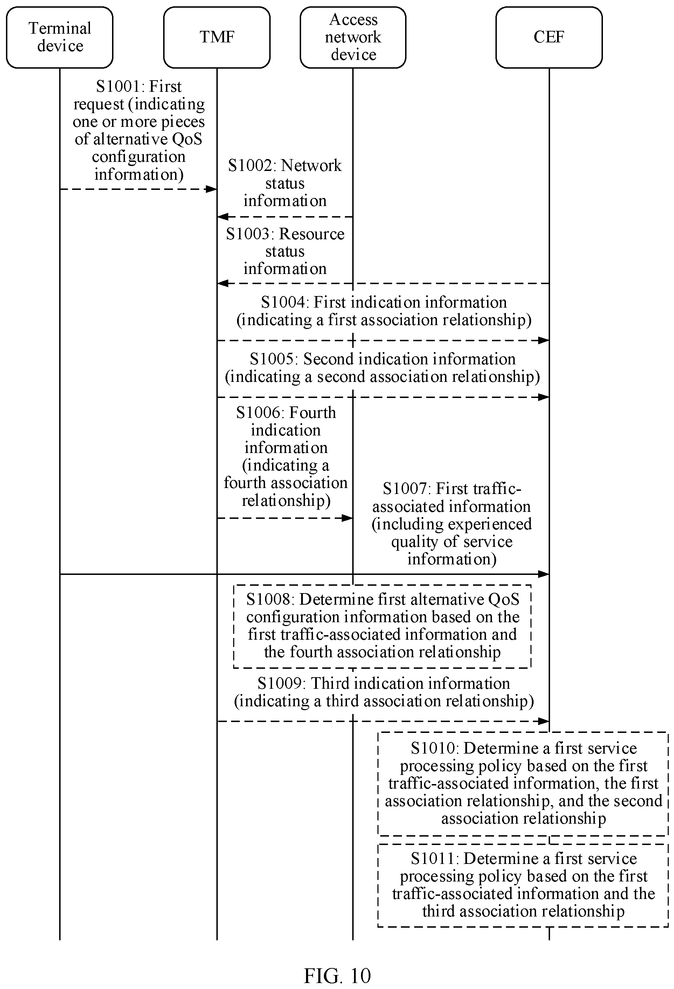

The following describes the communication method shown in FIG. 9 by using an example in which a first communication apparatus is a CEF, a second communication apparatus is a terminal device, a third communication apparatus is a TMF, a fourth communication apparatus is an access network device, and first traffic-associated information includes experienced quality of service information. FIG. 10 is a diagram of a communication method according to an embodiment of this application. FIG. 10 includes steps S1001 to S1011, which are separately described below.

S1001: The terminal device sends a first request to the TMF. Correspondingly, the TMF receives the first request from the terminal device.

The first request may also be referred to as a computing service request (computing service request). In a possible design, the first request may carry computing service identifier information and/or one or more pieces of alternative QoS configuration information corresponding to a first task. The one or more pieces of alternative QoS configuration information include at least one piece of alternative QoS configuration information corresponding to a first service flow. In another possible design, when the first request does not carry one or more pieces of alternative QoS configuration information, the TMF may negotiate with a core network function (for example, a PCF) based on service identifier information of the computing service request to obtain the one or more pieces of alternative QoS configuration information.

It should be understood that S1001 uses an example in which the TMF obtains the one or more pieces of alternative QoS configuration information from the terminal device. Actually, the TMF may alternatively preconfigure or predefine the one or more pieces of alternative QoS configuration information. In other words, S1001 is an optional step, and is shown by a dashed line in FIG. 10.

S1002: The access network device sends network status information to the TMF. Correspondingly, the TMF receives the network status information from the access network device.

In FIG. 10, an example in which the TMF receives the network status information from the access network device is used for description. Actually, the TMF may alternatively determine the network status information by itself. This is not specifically limited. For content of the network status information, refer to the foregoing content of the network status information. Details are not described herein again.

S1003: The CEF sends resource status information to the TMF. Correspondingly, the TMF receives the resource status information from the CEF.

The resource status information in S1003 may indicate resource usage of the CEF, and optionally, may further indicate resource status information of the terminal device. For content of the resource status information, refer to the foregoing content of the resource status information. Repeated content is not described again.

It should be understood that the TMF may not need the network status information or the resource status information. In this case, S1002 and S1003 are optional steps, and are shown by dashed lines in FIG. 10.

S1004: The TMF sends first indication information to the CEF. Correspondingly, the CEF receives the first indication information from the TMF. The first indication information may indicate a first association relationship. For content of the first indication information and the first association relationship, refer to the content of the first indication information and the first association relationship respectively in FIG. 9. Details are not described herein again.

For example, the first association relationship meets a first rule, which may alternatively be described as that the TMF may determine the first association relationship based on the first rule. The first rule indicates, for example, that a service processing policy matches or meets alternative QoS configuration information. In this case, it may be understood that the TMF determines the first association relationship based on the one or more pieces of alternative QoS configuration information and the first rule.

For example, when the alternative QoS configuration information indicates a high computing delay requirement, the TMF determines a service processing policy, where the service processing policy may indicate to schedule one or more subtasks having a small input/output data amount or a loose transmission delay requirement to the CEF and schedule one or more subtasks having a large input/output data amount or a strict transmission delay requirement to the terminal device. In this way, a transmission delay requirement corresponding to the service processing policy can be met, and network resources occupied by a data packet can be relatively reduced.

When the alternative QoS configuration information indicates a low computing delay requirement, the TMF may determine a service processing policy, where the service processing policy indicates to schedule one or more subtasks having a large computation amount or a strict computing delay requirement to the CEF and schedule one or more subtasks having a small computation amount or a loose computing delay requirement to the terminal device. In this way, the determined service processing policy can meet a requirement of the alternative QoS quality information. Optionally, for the first association relationship, refer to the foregoing examples in Table 5 and Table 6. Details are not described herein again.

In a possible implementation, the first rule further indicates that the service processing policy meets the network status information, the resource status information, and/or the like. In this way, an end-to-end experience indicator of a service is implemented. In this case, it may be understood that the TMF determines the first association relationship based on the one or more pieces of alternative QoS configuration information, the network status information, and the resource status information.

For example, when the alternative QoS configuration information indicates a high computing delay requirement, and the network status information indicates a poor current network and many remaining resources of the terminal device, the TMF determines a service processing policy, where the service processing policy may indicate to schedule one or more subtasks having a small input/output data amount or a loose transmission delay requirement to the CEF and schedule one or more subtasks having a large input/output data amount or a strict transmission delay requirement to the terminal device. In this way, a transmission delay requirement corresponding to the service processing policy can be met.

When the alternative QoS configuration information indicates a low computing delay requirement, and the network status information indicates a good current network and few remaining resources of the terminal device, the TMF may determine a service processing policy, where the service processing policy indicates to schedule one or more subtasks having a large computation amount or a strict computing delay requirement to the CEF and schedule one or more subtasks having a small computation amount or a loose computing delay requirement to the terminal device. In this way, the determined service processing policy can meet a requirement of the alternative QoS quality information. Optionally, for the first association relationship, refer to the foregoing examples in Table 3 and Table 4. Repeated content is not described again.

It should be understood that the TMF may determine the first association relationship in a plurality of manners. For example, the first association relationship may alternatively be preconfigured or predefined in the TMF, or may be received by the TMF from another apparatus. This is not specifically limited in this embodiment of this application.

S1005: The TMF sends second indication information to the CEF. Correspondingly, the CEF receives the second indication information from the TMF. The second indication information may indicate a second association relationship. For content of the second indication information and the second association relationship, refer to the foregoing content of the second indication information and the second association relationship respectively in FIG. 9. Details are not described herein again.

The second association relationship may meet a second rule, which may alternatively be described as that the TMF determines the second association relationship based on the second rule. The second rule may indicate that traffic-associated information and corresponding alternative QoS configuration information may be in a mutual compensation relationship. In this way, end-to-end delay assurance can be implemented for a service, and network resources occupied by a data packet can also be relatively reduced.

For example, the second rule may be specifically described as that if traffic-associated information indicates a smaller (that is, strict) experienced transmission delay, it may be determined that a PDB required by alternative QoS configuration information associated with the traffic-associated information may be larger (that is, loose). On the contrary, if traffic-associated information indicates a larger (that is, loose) experienced transmission delay, it may be determined that a PDB required by alternative QoS configuration information associated with the traffic-associated information may be smaller (that is, strict).

It should be understood that the TMF may determine the second association relationship in a plurality of manners. For example, the second association relationship may alternatively be preconfigured or predefined in the TMF, or may be received by the TMF from another apparatus. This is not specifically limited in this embodiment of this application.

S1006: The TMF sends fourth indication information to the access network device. Correspondingly, the access network device receives the fourth indication information from the TMF. The fourth indication information indicates a fourth association relationship.

The fourth association relationship indicates an association relationship between one or more pieces of traffic-associated information and one or more pieces of alternative QoS configuration information. For example, the fourth association relationship includes an association relationship between the one or more pieces of traffic-associated information and identifiers of the one or more pieces of alternative QoS configuration information, or includes an association relationship between identifiers of the one or more pieces of traffic-associated information and the one or more pieces of alternative QoS configuration information, or includes an association relationship between identifiers of the one or more pieces of traffic-associated information and identifiers of the one or more pieces of alternative QoS configuration information. A specific form of the fourth association relationship is not limited in this embodiment of this application.

It should be understood that the one or more pieces of traffic-associated information may be in one-to-one correspondence with the one or more pieces of alternative QoS configuration information in the fourth association relationship. For example, each piece of traffic-associated information in the one or more pieces of traffic-associated information is associated with one piece of alternative QoS configuration information in the one or more pieces of alternative QoS configuration information in the fourth association relationship. Alternatively, the one or more pieces of traffic-associated information may be in many-to-one correspondence with the one or more pieces of alternative QoS configuration information in the fourth association relationship. For example, a plurality of pieces of traffic-associated information in the one or more pieces of traffic-associated information are associated with one piece of alternative QoS configuration information in the one or more pieces of alternative QoS configuration information in the fourth association relationship. Alternatively, the one or more pieces of traffic-associated information are in one-to-one correspondence and many-to-one correspondence with the one or more pieces of alternative QoS configuration information in the fourth association relationship. This is not specifically limited.

For content of the identifiers of the one or more pieces of traffic-associated information, refer to the foregoing content of the identifiers of the one or more pieces of traffic-associated information. Repeated content is not described again.

For content of the identifiers of the one or more pieces of alternative QoS configuration information, refer to the foregoing content of the identifiers of the one or more pieces of alternative QoS configuration information. Repeated content is not described again. One piece of alternative QoS configuration information may include a plurality of pieces of information, and an identifier of one piece of alternative QoS configuration information in the fourth association relationship may be represented by content indicated by communication-related information in the plurality of pieces of alternative QoS configuration information. The content indicated by the communication-related information includes, for example, QoS such as an input/output data throughput, a PDB, or a GBR.

In a possible design, the fourth association relationship may be the same as the second association relationship. In this case, for specific content of the fourth association relationship, refer to the foregoing content of the second association relationship. For an example of the fourth association relationship, refer to the foregoing examples shown in Table 1 to Table 4. Alternatively, the fourth association relationship is different from the second association relationship. For example, the identifiers of the one or more pieces of alternative QoS configuration information in the second association relationship are represented by content indicated by computing-related information, and the identifiers of the one or more pieces of alternative QoS configuration information in the fourth association relationship are represented by content indicated by communication-related information.

It should be understood that the fourth association relationship may be in a form of a table, or may be actually in another form. For example, the fourth association relationship may be alternatively represented in a function or another form. This is not limited herein.

S1007: The terminal device sends first traffic-associated information to the CEF. Correspondingly, the CEF receives the first traffic-associated information from the terminal device. For content of the first traffic-associated information, refer to the foregoing content of the first traffic-associated information in FIG. 9. Repeated content is not described again. In FIG. 10, an example in which the first traffic-associated information includes experienced quality of service information is used for illustration.

S1008: The access network device determines first alternative QoS configuration information based on the first traffic-associated information and the fourth association relationship.

The first traffic-associated information is transmitted through a first path, and the first path may further indicate the access network device. In other words, the first traffic-associated information further passes through the access network device. Therefore, the access network device may determine the first alternative QoS configuration information based on the first traffic-associated information and the fourth association relationship. For example, the access network device may determine, as the first QoS configuration information, alternative QoS configuration information that can match the first traffic-associated information in the fourth association relationship.

For example, if the access network device detects that the first traffic-associated information indicates that a transmission delay experienced by a data packet is greater than a first threshold, the access network device may select alternative QoS configuration information with a small PDB, to reduce an end-to-end delay of the data packet; and if the access network device detects that the first traffic-associated information indicates that a transmission delay experienced by a data packet is less than a second threshold, the access network device may select large alternative QoS configuration information, to meet an end-to-end delay requirement of data as much as possible and reduce network resources occupied by the data packet. In a possible implementation, the access network device may notify the terminal device of the selected first alternative QoS configuration information by using air interface signaling.

Optionally, after determining the first alternative QoS configuration information, the access network device may determine a first RRC parameter based on the first alternative QoS configuration information. For example, the access network device may determine an RRC parameter based on a fifth association relationship and the first alternative QoS configuration information. The fifth association relationship indicates an association relationship between one or more pieces of alternative QoS configuration information and one or more RRC parameters. The one or more pieces of alternative QoS configuration information may include the first alternative QoS configuration information, and the one or more RRC parameters may include the first RRC parameter.

In a possible design, the access network device may indicate the determined first RRC parameter to the terminal device by using fifth indication information, so that the terminal device and the access network device can perform an air interface interaction in time by using the first RRC parameter. The access network device may send the fifth indication information to the terminal device in a plurality of manners, and the following provides an example for description.
1. The access network device may directly send the fifth indication information to the terminal device.

A module for determining the first alternative QoS configuration information and an implementation of the fifth indication information vary with a structure of the access network device. In this case, a process in which the access network device internally transmits the fifth indication information may also vary. The following provides an example for description with reference to cases shown in C1 to C4.

If the access network device is a device of a CU/DU separated architecture, a CU of the access network device determines the first alternative QoS configuration information, and the fifth indication information may be carried in DCI or a MAC CE, the CU may notify a DU of the fifth indication information through an F1 interface.

If the access network device is a device of a CU/DU separated architecture, a DU of the access network device determines the first alternative QoS configuration information, and the fifth indication information may be carried in an RRC message or a PDCP control PDU, the DU may notify a CU of the fifth indication information through an F1 interface.

If the CU of the access network device is further separated into a CU-CP and a CU-UP, the CU-CP determines the first alternative QoS configuration information, and the fifth indication information may be carried in the PDCP control PDU. In this case, the CU-CP needs to further notify the CU-UP of the indication information.

If the access network device is a device of an O-RAN architecture, an nrt-RIC determines the first alternative QoS configuration information, and the fifth indication information may be carried in DCI or a MAC CE, the nrt-RIC may notify a DU of the fifth indication information through an E2 interface.

If the access network device is a device of an O-RAN architecture, an nrt-RIC determines the first alternative QoS configuration information, and the fifth indication information may be carried in an RRC message or a PDCP control PDU, the nrt-RIC may notify a CU of the fifth indication information. If the CU is further separated into a CU-CP and a CU-UP, the nrt-RIC may separately notify the CU-CP and the CU-UP of the fifth indication information, and then the CU-CP and the CU-UP separately includes the fifth indication information in the RRC message or the PDCP control PDU.

2. The access network device may send the fifth indication information to the terminal device through a 5GC control plane.

For example, the access network device may include the fifth indication information in a PDU session resource notify (resource notify) message. For example, a current QoS parameters set index information element (current QoS parameters set index IE) in the PDU session resource notify message carries the fifth indication information. The access network device may send, to an SMF through an AMF, the PDU session resource notify message carrying the fifth indication information. The SMF may include the fifth indication information in NAS signaling, and send the NAS signaling to the terminal device. Optionally, the SMF may forward the fifth indication information to a PCF, and the PCF sends the fifth indication information to an AF of the application server.

3. The access network device may notify the terminal device of the fifth indication information in a user plane traffic-associated carrying manner.

For example, the access network device may include the selected fifth indication information in user plane part of GPRS tunneling protocol (user plane part of GPRS tunneling protocol, GTP-U) headers of one or more pieces of uplink data through an NG3 interface, and notify a UPF of the user plane part of GPRS tunneling protocol headers carrying the fifth indication information. The one or more pieces of uplink data are uplink data of a QoS flow that supports the alternative QoS configuration information, or dummy (dummy) uplink data generated by the access network device to transmit the fifth indication information. This is not limited.

A module for determining the first alternative QoS configuration information and an implementation of the fifth indication information vary with a structure of the access network device. In this case, a process in which the access network device internally transmits the fifth indication information may also vary. The following provides an example for description.

If the access network device is an access network device of a CU/DU separated architecture, and the first QoS configuration information is determined by a DU, the DU may notify a CU of the first indication information through an F1 interface.

If the CU is further separated into a CU-CP and a CU-UP, the CU-CP needs to further notify the CU-UP of the first indication information, or the DU notifies the CU-UP of the first indication information through an F1-u interface (for example, includes the first indication information in a GTP-u header of uplink data of the F1-u interface).

If the access network device is an access network device of an O-RAN architecture, and the first indication information is determined by an nrt-RIC, the nrt-RIC may notify a CU of the first indication information. If the CU is further separated into a CU-CP and a CU-UP, the nrt-RIC needs to notify the CU-UP of the first indication information.

It should be understood that S1006 and S1008 may be used as an independent embodiment. In this case, all steps in FIG. 10 other than S1006 and S1008 may be optional steps.

S1009: The TMF sends third indication information to the CEF. Correspondingly, the CEF receives the third indication information from the TMF. The third indication information indicates a third association relationship. For content of the third association relationship and content of the third indication information, refer to the foregoing content of the third association relationship and the third indication information respectively in FIG. 9. Repeated content is not described again.

It should be understood that S1009, and S1004 and S1005 are two alternative solutions. In other words, in an actual execution process, step S1009 is performed, or steps S1004 and S1005 are performed. These steps are shown by dashed lines in FIG. 10.

In a possible implementation, the first alternative QoS configuration information further matches the network status information. In other words, the access network device may determine the first alternative QoS configuration information based on the first traffic-associated information, the fourth association relationship, and the network status information. For content in which the first alternative QoS configuration information further matches the network status information, refer to the foregoing content in which the first alternative QoS configuration information further matches the network status information in FIG. 9. For content in which the access network device determines that the first alternative QoS configuration information further matches the network status information, refer to the foregoing content in which the access network device determines that the first alternative QoS configuration information further matches the network status information in FIG. 9. Repeated content is not described again.

In a possible implementation, in a possible implementation, the first communication apparatus further determines that the first alternative QoS configuration information matches resource status information of the first communication apparatus and/or the second communication apparatus. In other words, the access network device may determine the first alternative QoS configuration information based on the first traffic-associated information, the fourth association relationship, and the resource status information of the first communication apparatus and/or the second communication apparatus. For content in which the first alternative QoS configuration information further matches the resource status information of the first communication apparatus and/or the second communication apparatus, refer to the foregoing content in which the first alternative QoS configuration information further matches the resource status information of the first communication apparatus and/or the second communication apparatus in FIG. 9. For content in which the access network device determines that the first alternative QoS configuration information further matches the resource status information of the first communication apparatus and/or the second communication apparatus, refer to the foregoing content in which the access network device determines that the first alternative QoS configuration information further matches the resource status information of the first communication apparatus and/or the second communication apparatus in FIG. 9. Repeated content is not described again.

It should be understood that the first alternative QoS configuration information may alternatively match both the network status information and the resource status information of the first communication apparatus and/or the second communication apparatus. This is not specifically limited.

S1010: The CEF determines a first service processing policy based on the first traffic-associated information, the first association relationship, and the second association relationship.

For example, the CEF may determine, from the first association relationship based on the first traffic-associated information, alternative QoS configuration information (that is, the first alternative QoS configuration information) that matches the first traffic-associated information, and determine, from the second association relationship based on the first alternative QoS configuration information, a service processing policy that matches the first alternative QoS configuration information, to obtain the first service processing policy. For content of determining the first service processing policy in S1010, refer to the foregoing content of determining the first service processing policy in A1 in FIG. 9. Repeated content is not described again.

S1011: The CEF determines a first service processing policy based on the first traffic-associated information and the third association relationship.

For content of determining the first service processing policy in S1011, refer to the foregoing content of determining the first service processing policy in A2 in FIG. 9. Repeated content is not described again.

It should be understood that when S1004 and S1005 are performed, step S1010 may be performed. When S1008 is performed, step S1011 may be performed. In other words, S1010 and S1011 are two interchangeable steps, and are shown by dashed lines in FIG. 10.

In a possible implementation, after the CEF determines the first service processing policy, the CEF may further adjust, based on the first service processing policy, a manner in which the CEF processes a first service.

In this embodiment of this application, the CEF may quickly and flexibly adjust the service processing policy based on the first traffic-associated information, thereby ensuring effect and quality of collaboratively adjusting the service processing policy by the terminal device and the CEF. In addition, the access network device may quickly and flexibly select appropriate alternative QoS configuration information based on the first traffic-associated information, thereby ensuring effect of an air interface interaction between the terminal device and the access network device.

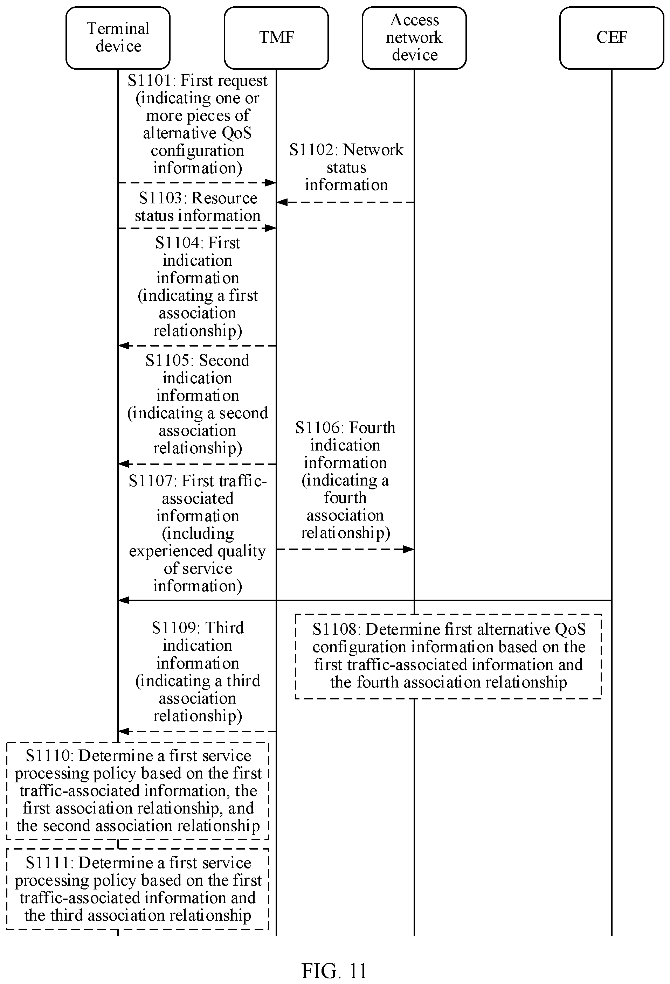

The following describes the communication method shown in FIG. 9 by using an example in which a first communication apparatus is a terminal device, a second communication apparatus is a CEF, a third communication apparatus is a TMF, a fourth communication apparatus is an access network device, and first traffic-associated information includes experienced quality of service information. FIG. 11 is a diagram of a communication method according to an embodiment of this application. FIG. 11 includes steps S1101 to S1111, which are separately described below.

S1101: The terminal device sends a first request to the TMF. Correspondingly, the TMF receives the first request from the terminal device.

For content of the first request, refer to the content of the first request in FIG. 10. Repeated content is not described again.

It should be understood that S1101 uses an example in which the TMF obtains the one or more pieces of alternative QoS configuration information from the terminal device. Actually, the TMF may alternatively preconfigure or predefine the one or more pieces of alternative QoS configuration information. In other words, S1101 is an optional step, and is shown by a dashed line in FIG. 10.

S1102: The access network device sends network status information to the TMF. Correspondingly, the TMF receives the network status information from the access network device.

For content of the network status information, refer to the foregoing content of the network status information in FIG. 10. Repeated content is not described again.

S1103: The terminal device sends resource status information to the TMF. Correspondingly, the TMF receives the resource status information from the terminal device.

For content of the resource status information, refer to the foregoing content of the resource status information in FIG. 10. Repeated content is not described again.

It should be understood that the TMF may not need the network status information or the resource status information. In this case, S1102 and S1103 are optional steps, and are shown by dashed lines in FIG. 11.

S1104: The TMF sends first indication information to the terminal device. Correspondingly, the terminal device receives the first indication information from the TMF. For content of the first indication information, refer to the foregoing content of the first indication information in FIG. 10. Repeated content is not described again.

S1105: The TMF sends second indication information to the terminal device. The terminal device receives the second indication information from the TMF. For content of the second indication information, refer to the foregoing content of the second indication information in FIG. 10. Repeated content is not described again.

S1106: The TMF sends fourth indication information to the access network device. Correspondingly, the access network device receives the fourth indication information from the TMF. For content of the fourth indication information, refer to the foregoing content of the fourth indication information in FIG. 10. Repeated content is not described again.

S1107: The CEF sends first traffic-associated information to the terminal device. Correspondingly, the terminal device receives the first traffic-associated information from the CEF. For content of the first traffic-associated information, refer to the foregoing content of the first traffic-associated information in FIG. 9. Repeated content is not described again.

S1108: The access network device determines first alternative QoS configuration information based on the first traffic-associated information and the fourth association relationship.

For content of the fourth association relationship, refer to the content of the fourth association relationship in FIG. 10. Repeated content is not described again. For a manner in which the access network device determines the first alternative QoS configuration information, refer to the foregoing content. Repeated content is not described again. Optionally, the access network device may further determine a first RRC parameter based on the first alternative QoS configuration information. Optionally, the first RRC parameter may be further indicated to the terminal device.

It should be understood that S1106 and S1108 may be used as an independent embodiment. In this case, all steps in FIG. 11 other than S1106 and S1108 may be optional steps.

In a possible implementation, the first alternative QoS configuration information further matches the network status information. In other words, the access network device may determine the first alternative QoS configuration information based on the first traffic-associated information, the fourth association relationship, and the network status information. For content in which the first alternative QoS configuration information further matches the network status information, refer to the foregoing content in which the first alternative QoS configuration information further matches the network status information in FIG. 9. For content in which the access network device determines that the first alternative QoS configuration information further matches the network status information, refer to the foregoing content in which the access network device determines that the first alternative QoS configuration information further matches the network status information in FIG. 9. Repeated content is not described again.

In a possible implementation, in a possible implementation, the first communication apparatus further determines that the first alternative QoS configuration information matches resource status information of the first communication apparatus and/or the second communication apparatus. In other words, the access network device may determine the first alternative QoS configuration information based on the first traffic-associated information, the fourth association relationship, and the resource status information of the first communication apparatus and/or the second communication apparatus. For content in which the first alternative QoS configuration information further matches the resource status information of the first communication apparatus and/or the second communication apparatus, refer to the foregoing content in which the first alternative QoS configuration information further matches the resource status information of the first communication apparatus and/or the second communication apparatus in FIG. 9. For content in which the access network device determines that the first alternative QoS configuration information further matches the resource status information of the first communication apparatus and/or the second communication apparatus, refer to the foregoing content in which the access network device determines that the first alternative QoS configuration information further matches the resource status information of the first communication apparatus and/or the second communication apparatus in FIG. 9. Repeated content is not described again.

It should be understood that the first alternative QoS configuration information may alternatively match both the network status information and the resource status information of the first communication apparatus and/or the second communication apparatus. This is not specifically limited.

S1109: The TMF sends third indication information to the terminal device. Correspondingly, the terminal device receives the third indication information from the TMF.

It should be understood that S1109, and S1104 and S1105 are two alternative solutions. In other words, in an actual execution process, step S1109 is performed, or steps S1104 and S1105 are performed. These steps are shown by dashed lines in FIG. 11.

S1110: The terminal device determines a first service processing policy based on the first traffic-associated information, the first association relationship, and the second association relationship.

In this case, the terminal device may determine the first alternative QoS configuration information based on the first traffic-associated information and the second association relationship, and determine the first service processing policy based on the first alternative QoS configuration information and the first association relationship. For content of performing S1110 by the terminal device, refer to the foregoing content of determining the first service processing policy in A1 in FIG. 9. Repeated content is not described again.

Optionally, the terminal device may further determine a first RRC parameter based on the first alternative QoS configuration information. For content of determining the first RRC parameter by the terminal device, refer to the foregoing content of determining the first RRC parameter by the access network device in FIG. 10. Repeated content is not described again. Certainly, if the access network device indicates the first RRC parameter to the terminal device, the terminal device may not need to determine the first RRC parameter by itself.

S1111: The terminal device determines a first service processing policy based on the first traffic-associated information and the third association relationship. For content of performing S1111 by the terminal device, refer to the foregoing content of determining the first service processing policy in A2 in FIG. 9. Repeated content is not described again.

In a possible implementation, if the third association relationship further indicates a relationship between one or more pieces of traffic-associated information and one or more pieces of alternative QoS configuration information, the terminal device may determine the first alternative QoS configuration information based on the third association relationship and the first traffic-associated information, and determine the first RRC parameter based on the first alternative QoS configuration information.

It should be understood that when S1104 and S1105 are performed, step S1110 may be performed. When S1108 is performed, step S1111 may be performed. In other words, S1110 and S1111 are two interchangeable steps, and are shown by dashed lines in FIG. 11.

In a possible implementation, after the CEF determines the first service processing policy, the CEF may further adjust, based on the first service processing policy, a manner in which the CEF processes a first service.

In this embodiment of this application, the terminal device may quickly and flexibly adjust the service processing policy based on the first traffic-associated information, thereby ensuring effect and quality of collaboratively adjusting the service processing policy by the terminal device and the CEF. In addition, the access network device may quickly and flexibly select appropriate alternative QoS configuration information based on the first traffic-associated information, thereby ensuring effect of an air interface interaction between the terminal device and the access network device.

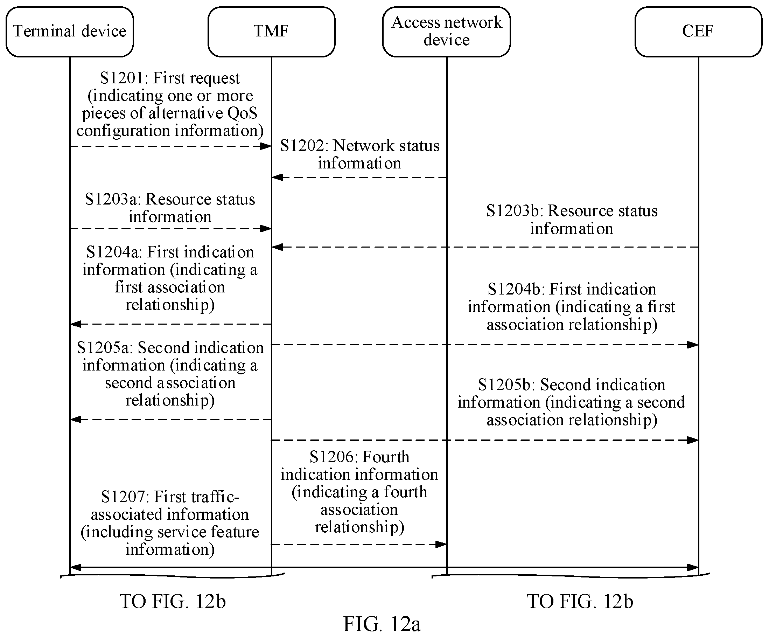

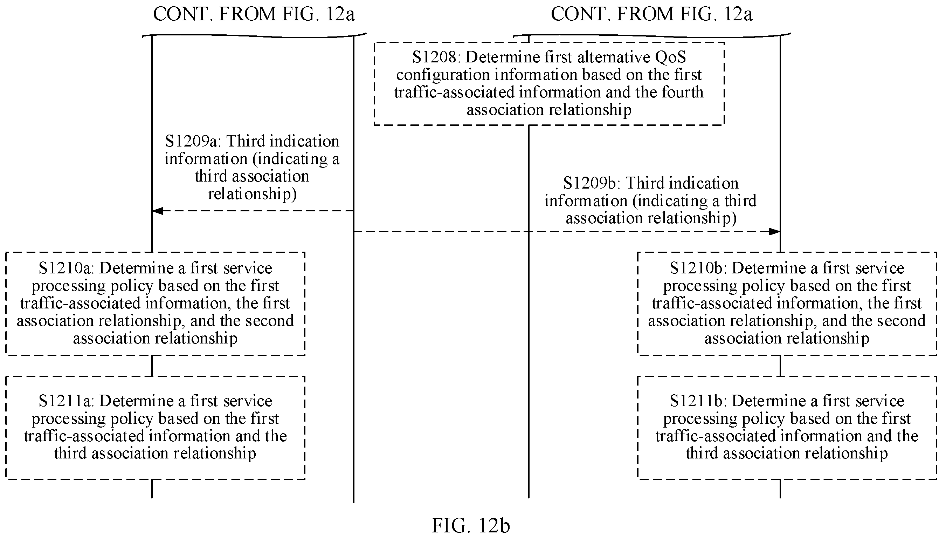

The following describes the communication method shown in FIG. 9 by using an example in which a first communication apparatus includes a terminal device and a CEF, a second communication apparatus correspondingly includes a CEF and a terminal device, a third communication apparatus is a TMF, a fourth communication apparatus is an access network device, and first traffic-associated information includes service feature information. FIG. 12a and FIG. 12b are a diagram of a communication method according to an embodiment of this application. FIG. 12a and FIG. 12b include steps S1201 to S1211, which are separately described below.

S1201: The terminal device sends a first request to the TMF. Correspondingly, the TMF receives the first request from the terminal device. For content of the first request, refer to the content of the first request in FIG. 10. Repeated content is not described again.

It should be understood that S1201 uses an example in which the TMF obtains the one or more pieces of alternative QoS configuration information from the terminal device. Actually, the TMF may alternatively preconfigure or predefine the one or more pieces of alternative QoS configuration information. In other words, S1201 is an optional step, and is shown by a dashed line in FIG. 12a and FIG. 12b.

S1202: The access network device sends network status information to the TMF. Correspondingly, the TMF receives the network status information from the access network device.

For content of the network status information, refer to the foregoing content of the network status information in FIG. 10. Repeated content is not described again.

S1203: The terminal device and the CEF separately send resource status information to the TMF. Correspondingly, the TMF separately receives the resource status information from the terminal device and the CEF.

For content of the resource status information, refer to the foregoing content of the resource status information in FIG. 10. Repeated content is not described again.

S1203 may specifically include two steps: S1203a and S1203b. S1203a: The terminal device sends the resource status information to the TMF. Correspondingly, the TMF receives the resource status information from the terminal device. S1203b: The CEF sends the resource status information to the TMF. Correspondingly, the TMF receives the resource status information from the CEF.

It should be understood that the TMF may not need the network status information or the resource status information. In this case, S1202 and S1203 are optional steps, and are shown by dashed lines in FIG. 12a and FIG. 12b.

S1204: The TMF separately sends first indication information to the terminal device and the CEF. Correspondingly, the terminal device and the CEF separately receive the first indication information from the TMF. For content of the first indication information, refer to the foregoing content of the first indication information in FIG. 10. Repeated content is not described again.

S1204 may specifically include two steps: S1204a and S1204b. S1204a: The TMF sends the first indication information to the terminal device. Correspondingly, the terminal device receives the first indication information from the TMF. S1204b: The TMF sends the first indication information to the CEF. Correspondingly, the CEF receives the first indication information from the TMF.

S1205: The TMF separately sends second indication information to the terminal device and the CEF. The terminal device and the CEF separately receive the second indication information from the TMF. For content of the second indication information, refer to the foregoing content of the second indication information in FIG. 10. Repeated content is not described again.

Optionally, S1205 may specifically include two steps: S1205a and S1205b. S1205a: The TMF sends the second indication information to the terminal device. Correspondingly, the terminal device receives the second indication information from the TMF. S1205b: The TMF sends the second indication information to the CEF. Correspondingly, the CEF receives the second indication information from the TMF.

S1206: The TMF sends fourth indication information to the access network device. Correspondingly, the access network device receives the fourth indication information from the TMF. For content of the fourth indication information, refer to the foregoing content of the fourth indication information in FIG. 10. Repeated content is not described again.

S1207: The CEF and the terminal device mutually send the first traffic-associated information.

For example, the CEF sends the first traffic-associated information to the terminal device. For example, the CEF may include the first traffic-associated information in a data packet (such as a downlink data packet) of a first service flow, and send the data packet to the terminal device. The terminal device sends the first traffic-associated information to the CEF. For example, the terminal device may include the first traffic-associated information in a data packet (such as an uplink data packet) of the first service flow, and send the data packet to the CEF. For content of the first traffic-associated information, refer to the foregoing content of the first traffic-associated information in FIG. 9. Repeated content is not described again. The first traffic-associated information may include service feature information. For content of the service feature information, refer to the foregoing content of the service feature information in FIG. 9. Details are not described herein again.

S1208: The access network device determines first alternative QoS configuration information based on the first traffic-associated information and the fourth association relationship.

For content of the fourth association relationship, refer to the content of the fourth association relationship in FIG. 10. Repeated content is not described again. For a manner in which the access network device determines the first alternative QoS configuration information, refer to the foregoing content. Repeated content is not described again.

It should be understood that S1206 and S1208 may be used as an independent embodiment. In this case, all steps in FIG. 12a and FIG. 12b other than S1206 and S1208 may be optional steps.

S1209: The TMF separately sends third indication information to the terminal device and the CEF. Correspondingly, the terminal device and the CEF separately receive the third indication information from the TMF.

S1209 may specifically include two steps: S1209a and S1209b. S1209a: The TMF sends the third indication information to the terminal device. Correspondingly, the terminal device receives the third indication information from the TMF. S1209b: The TMF sends the third indication information to the CEF. Correspondingly, the CEF receives the third indication information from the TMF.

It should be understood that S1209, and S1204 and S1205 are two alternative solutions. In other words, in an actual execution process, step S1209 is performed, or steps S1204 and S1205 are performed. These steps are shown by dashed lines in FIG. 12a and FIG. 12b.

S1210: The terminal device and the CEF separately determine a first service processing policy based on the first traffic-associated information, the first association relationship, and the second association relationship.

S1210 may specifically include two steps: S1210a and S1210b. S1210a: The terminal device determines the first service processing policy based on the first traffic-associated information, the first association relationship, and the second association relationship. S1210b: The CEF determines the first service processing policy based on the first traffic-associated information, the first association relationship, and the second association relationship. For content of performing S1210, refer to the foregoing content of determining the first service processing policy in A1 in FIG. 9. Repeated content is not described again.

S1211: The terminal device determines a first service processing policy based on the first traffic-associated information and the third association relationship. For content of performing S1211, refer to the foregoing content of determining the first service processing policy in A2 in FIG. 9. Repeated content is not described again.

S1211 may specifically include two steps: S1211a and S1211b. S1211a: The terminal device determines the first service processing policy based on the first traffic-associated information and the third association relationship. S1211b: The CEF determines the first service processing policy based on the first traffic-associated information and the third association relationship.

It should be understood that when S1204 and S1205 are performed, step S1210 may be performed. When S1208 is performed, step S1211 may be performed. In other words, S1210 and S1211 are two interchangeable steps, and are shown by dashed lines in FIG. 12a and FIG. 12b.

In a possible implementation, after the CEF determines the first service processing policy, the CEF and the terminal device may further separately adjust, based on the first service processing policy, a manner in which the CEF processes a first service.

In this embodiment of this application, both the terminal device and the CEF may quickly and flexibly adjust the service processing policy based on the service feature information included in the first traffic-associated information, thereby ensuring effect and quality of collaboratively adjusting the service processing policy by the terminal device and the CEF. In addition, the access network device may quickly and flexibly select appropriate alternative QoS configuration information based on the first traffic-associated information, thereby ensuring effect of an air interface interaction between the terminal device and the access network device.

It may be understood that to implement functions in the foregoing embodiments, the base station and the terminal include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on particular application scenarios and design constraints of the technical solutions.

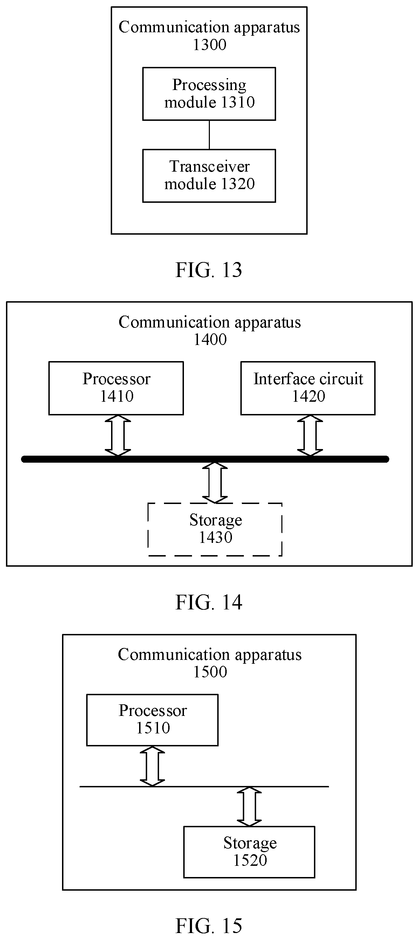

A diagram of a structure of a communication apparatus according to an embodiment of this application is provided. FIG. 13 is a diagram of a structure of a communication apparatus according to an embodiment of this application. FIG. 13 is a diagram of a structure of a possible communication apparatus according to an embodiment of this application. The communication apparatus may be configured to implement functions of the terminal device, the access network device, the CEF, the TMF, or the like in the foregoing method embodiments. Therefore, the beneficial effects of the foregoing method embodiments can also be achieved. In embodiments of this application, the communication apparatus may be the terminal device in any one of FIG. 1, FIG. 2, FIG. 4, and FIG. 5 to FIG. 8, may be the access network device in any one of FIG. 2 and FIG. 4 to FIG. 8, may be the TMF in FIG. 5, may be the application server in FIG. 4, may be the CEF in FIG. 5, or may be a module (such as a chip) used in the terminal device, the access network device, the TMF, or the CEF.

As shown in FIG. 13, the communication apparatus 1300 includes a processing module 1310 and a transceiver module 1320. The communication apparatus 1300 is configured to implement functions of the first communication apparatus or the second communication apparatus in FIG. 9, or may implement functions of the terminal device, the TMF, the access network device, the CEF, or the like in the method embodiment shown in FIG. 10, FIG. 11, or FIG. 12a and FIG. 12b.

In a first embodiment, the communication apparatus 1300 is configured to implement functions of the first communication apparatus in the method embodiment shown in FIG. 9, or may implement functions of the CEF in the method embodiment shown in FIG. 10, or may implement functions of the terminal device in the embodiment shown in FIG. 11, or may implement functions of the terminal device and/or the CEF in the embodiment shown in FIG. 12a and FIG. 12b.

For example, the communication apparatus 1300 is configured to implement the functions of the first communication apparatus in the method embodiment shown in FIG. 9. In this case, the transceiver module 1320 receives first traffic-associated information, and may determine a first service processing policy based on the first traffic-associated information.

For another example, the communication apparatus 1300 is configured to implement the functions of the CEF in the method embodiment shown in FIG. 10. In this case, the transceiver module 1320 may receive first traffic-associated information, and the processing module 1310 may be configured to perform S1010 or S1011. Optionally, the transceiver module 1320 may be further configured to send resource status information. The transceiver module 1320 may be further configured to receive first indication information and second indication information, or receive third indication information, or the like.

For another example, the communication apparatus 1300 is configured to implement the functions of the terminal device in the method embodiment shown in FIG. 11. In this case, the transceiver module 1320 may receive first traffic-associated information, and the processing module 1310 may perform S1110 and S1111. Optionally, the transceiver module 1320 is further configured to send a first request and resource status information. The transceiver module 1320 may be further configured to receive first indication information and second indication information, or configured to receive third indication information, or the like.

For another example, the communication apparatus 1300 is configured to implement the functions of the terminal device in the method embodiment shown in FIG. 12a and FIG. 12b. In this case, the transceiver module 1320 may receive first traffic-associated information, and the processing module 1310 may perform S1210a or S1211a. Optionally, the transceiver module 1320 is further configured to send a first request and resource status information. The transceiver module 1320 may be further configured to receive first indication information and second indication information, or configured to receive third indication information, or the like.

For another example, the communication apparatus 1300 is configured to implement the functions of the CEF in the method embodiment shown in FIG. 12a and FIG. 12b. In this case, the transceiver module 1320 may receive first traffic-associated information, and the processing module 1310 may perform S1210b or S1211b. Optionally, the transceiver module 1320 is further configured to send a first request and resource status information. The transceiver module 1320 may be further configured to receive first indication information and second indication information, or configured to receive third indication information, or the like.

In a second embodiment, the communication apparatus 1300 is configured to implement functions of the second communication apparatus in the method embodiment shown in FIG. 9, or may implement functions of the terminal device in the method embodiment shown in FIG. 10, or may implement functions of the CEF in the embodiment shown in FIG. 11, or may implement functions of the CEF and/or the terminal device in the embodiment shown in FIG. 12a and FIG. 12b.

For example, the communication apparatus 1300 is configured to implement the functions of the second communication apparatus in the method embodiment shown in FIG. 9. In this case, the transceiver module 1320 sends first traffic-associated information. Optionally, the processing module 1310 is further configured to determine a first service processing policy based on the first traffic-associated information, or the transceiver module 1320 is configured to receive fourth indication information.

For another example, the communication apparatus 1300 is configured to implement the functions of the terminal device in the method embodiment shown in FIG. 10. In this case, the transceiver module 1320 may send first traffic-associated information. Optionally, the processing module 1310 may be configured to determine a first service processing policy based on the first traffic-associated information, or the transceiver module 1320 is configured to receive fourth indication information.

For another example, the communication apparatus 1300 is configured to implement the functions of the CEF in the method embodiment shown in FIG. 11. In this case, the transceiver module 1320 may send first traffic-associated information. Optionally, the processing module 1310 may be configured to determine a first service processing policy based on the first traffic-associated information, or the transceiver module 1320 is configured to receive fourth indication information. Optionally, the transceiver module 1320 is further configured to send resource status information. The transceiver module 1320 may be further configured to receive first indication information and second indication information, or configured to receive third indication information, or the like.

For another example, the communication apparatus 1300 is configured to implement the functions of the terminal device in the method embodiment shown in FIG. 12a and FIG. 12b. In this case, the transceiver module 1320 may send first traffic-associated information. The processing module 1310 may perform S1210a or S1211a. Optionally, the transceiver module 1320 is further configured to send a first request and resource status information. The transceiver module 1320 may be further configured to receive first indication information and second indication information, or configured to receive third indication information, or the like.

For another example, the communication apparatus 1300 is configured to implement the functions of the CEF in the method embodiment shown in FIG. 12a and FIG. 12b. In this case, the transceiver module 1320 may receive first traffic-associated information. Optionally, the processing module 1310 may perform S1210b or S1211b. Optionally, the transceiver module 1320 is further used for resource status information. The transceiver module 1320 may be further configured to receive first indication information and second indication information, or configured to receive third indication information, or the like.

In a third embodiment, the communication apparatus 1300 is configured to implement functions of the TMF in the method embodiment shown in any one of FIG. 10 to FIG. 12a and FIG. 12b.

For example, the communication apparatus 1300 is configured to implement the functions of the TMF in the method embodiment shown in FIG. 10. In this case, the transceiver module 1320 may be configured to send first indication information and second indication information under control of the processing module 1310, or is configured to send third indication information. Optionally, the transceiver module 1320 may be further configured to: send a first request, receive network status information and resource status information, send fourth indication information, and the like.

For another example, the communication apparatus 1300 is configured to implement the functions of the TMF in the method embodiment shown in FIG. 11. In this case, the transceiver module 1320 may be configured to send first indication information and second indication information under control of the processing module 1310, or is configured to send third indication information. Optionally, the transceiver module 1320 may be further configured to: send a first request, receive network status information and resource status information, send fourth indication information, and the like.

For another example, the communication apparatus 1300 is configured to implement the functions of the TMF in the method embodiment shown in FIG. 12a and FIG. 12b. In this case, the transceiver module 1320 may be configured to send first indication information and second indication information under control of the processing module 1310, or is configured to send third indication information. Optionally, the transceiver module 1320 may be further configured to: send a first request, receive network status information and resource status information, send fourth indication information, and the like.

In a fourth embodiment, the communication apparatus 1300 is configured to implement functions of the access network device in the method embodiment shown in any one of FIG. 10 to FIG. 12a and FIG. 12b.

For example, the communication apparatus 1300 is configured to implement the functions of the access network device in the method embodiment shown in FIG. 10. In this case, the transceiver module 1320 may be configured to: receive fourth indication information, and determine first alternative QoS configuration information based on first traffic-associated information and a fourth association relationship.

For another example, the communication apparatus 1300 is configured to implement the functions of the access network device in the method embodiment shown in FIG. 11. In this case, the transceiver module 1320 may be configured to: receive fourth indication information, and determine first alternative QoS configuration information based on first traffic-associated information and a fourth association relationship.

For another example, the communication apparatus 1300 is configured to implement the functions of the access network device in the method embodiment shown in FIG. 12a and FIG. 12b. In this case, the transceiver module 1320 may be configured to: receive fourth indication information, and determine first alternative QoS configuration information based on first traffic-associated information and a fourth association relationship.

For specific content of the involved information and steps, refer to the content described in FIG. 9 to FIG. 11. No repeated content is listed.

A diagram of a structure of a communication apparatus according to an embodiment of this application is provided. FIG. 14 is a diagram of a structure of a communication apparatus according to an embodiment of this application. As shown in FIG. 14, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a storage 1430, configured to store instructions executed by the processor 1410, or store input data required by the processor 1410 to run instructions, or store data generated after the processor 1410 runs instructions.

When the communication apparatus 1400 is configured to implement the communication method shown in any one of FIG. 9 to FIG. 12a and FIG. 12b, the processor 1410 is configured to implement functions of the processing module 1310, and the interface circuit 1420 is configured to implement functions of the transceiver module 1320.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by an access network device to the terminal device. Alternatively, the chip in the terminal device sends information to another module (for example, a radio frequency module or an antenna) in the terminal device, where the information is sent by the terminal device to an access network device.

When the communication apparatus is a module used in an access network device, the module in the access network device implements functions of the access network device in the foregoing method embodiments. The module in the access network device receives information from another module (for example, a radio frequency module or an antenna) in the access network device, where the information is sent by a terminal device to the access network device. Alternatively, the module in the access network device sends information to another module (for example, a radio frequency module or an antenna) in the access network device, where the information is sent by the access network device to a terminal device. The module in the access network device herein may be a baseband chip in the access network device, or may be a DU or another module. The DU herein may be a DU in an open radio access network (open radio access network, O-RAN) architecture.

An embodiment of this application provides another example of a communication apparatus. The communication apparatus includes at least one processor and at least one storage. The at least one processor is coupled to the at least one storage. The at least one storage is configured to store instructions. When the instructions are executed by the at least one processor, the communication apparatus is enabled to perform the method in the foregoing embodiments. For example, the communication apparatus includes one processor and one storage. FIG. 15 is a diagram of a structure of a communication apparatus. As shown in FIG. 15, the communication apparatus 1500 includes one processor 1510 and one storage 1520. The processor 1510 is coupled to the storage 1520. The storage 1520 stores instructions. When the instructions stored in the storage 1520 are executed by the processor 1510, the communication apparatus 1500 performs the method performed by the first communication apparatus, the second communication apparatus, the TMF, the access network device, or the like in the foregoing embodiments.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor. The storage in embodiments of this application may include a volatile memory (volatile memory), for example, a random access memory (random access memory, RAM). The storage may alternatively include a non-volatile memory (non-volatile memory), for example, a read-only memory (read-only memory, ROM), a flash memory, a hard disk drive (hard disk drive, HDD), or a solid-state drive (solid-state drive, SSD).

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Alternatively, the processor and the storage medium may exist in a base station or a terminal as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application provides a chip system. The chip system includes a processor and an interface. The processor is configured to invoke instructions from the interface and run the instructions. When the processor executes the instructions, any one of the foregoing communication methods, for example, the communication method shown in any one of FIG. 9 to FIG. 12a and FIG. 12b, is implemented.

An embodiment of this application provides a communication system, and the communication system includes a first communication apparatus and a second communication apparatus. Optionally, the communication apparatus further includes a third communication apparatus, a fourth communication apparatus, and/or the like. The first communication apparatus and the second communication apparatus may respectively implement functions of the first communication apparatus and the second communication apparatus in the method embodiment shown in any one of FIG. 9 to FIG. 12a and FIG. 12b, and the third communication apparatus and the fourth communication apparatus may respectively implement functions of the third communication apparatus and the fourth communication apparatus in the embodiment shown in any one of FIG. 10 to FIG. 12a and FIG. 12b.

An embodiment of this application provides a computer-readable storage medium. The computer-readable storage medium is configured to store a computer program or instructions. When the computer program or the instructions are run, any one of the foregoing communication methods, for example, the communication method shown in any one of FIG. 9 to FIG. 12a and FIG. 12b, is implemented.

An embodiment of this application provides a computer program product including instructions. When the instructions are run on a computer, any one of the foregoing communication methods, for example, the communication method shown in any one of FIG. 9 to FIG. 12a and FIG. 12b, is implemented.

In embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first communication apparatus, wherein the method comprises:
receiving first traffic-associated information, wherein the first traffic-associated information is transmitted through a first path, the first path is a path for transmitting a first service flow between the first communication apparatus and a second communication apparatus, the first traffic-associated information comprises experienced quality of service information and/or service feature information, the experienced quality of service information indicates an actual transmission parameter of the first service flow in historical duration, and the service feature information indicates an attribute of a first service corresponding to the first service flow; and
determining, based on the first traffic-associated information, a first service processing policy corresponding to the first service, wherein the first service processing policy indicates a processing manner of the first service.

2. The method according to claim 1, wherein the first traffic-associated information is carried in a data packet of the first service flow.

3. The method according to claim 1 or 2, wherein determining, based on the first traffic-associated information, the first service processing policy corresponding to the first service comprises:
determining first alternative quality of service configuration information based on the first traffic-associated information, wherein the first alternative quality of service configuration information indicates one or more communication indicators that the first service flow needs to meet; and
determining the first service processing policy based on a first association relationship and the first alternative quality of service configuration information, wherein the first association relationship indicates an association relationship between one or more pieces of alternative quality of service configuration information and one or more service processing policies, the one or more pieces of alternative quality of service configuration information comprise the first alternative quality of service configuration information, and the one or more service processing policies comprise the first service processing policy.

4. The method according to claim 3, wherein the method further comprises:
receiving first indication information from a third communication apparatus, wherein the first indication information indicates the first association relationship.

5. The method according to claim 4, wherein the method further comprises:
sending a first request to the third communication apparatus, wherein the first request is used to request to determine a service processing policy corresponding to the first service, and the first request indicates the one or more pieces of alternative quality of service configuration information.

6. The method according to any one of claims 3 to 5, wherein determining the first alternative quality of service configuration information based on the first traffic-associated information comprises:
determining the first alternative quality of service configuration information based on the first traffic-associated information and a second association relationship, wherein the second association relationship comprises an association relationship between the one or more pieces of alternative quality of service configuration information and one or more pieces of traffic-associated information, and the one or more pieces of traffic-associated information comprise the first traffic-associated information.

7. The method according to claim 6, wherein the method further comprises:
receiving second indication information from the third communication apparatus, wherein the second indication information indicates the second association relationship.

8. The method according to any one of claims 1 to 7, wherein the first alternative quality of service configuration information comprises resource requirement information of a task corresponding to the first service, and the resource requirement information is used to describe a resource required for processing the task corresponding to the first service; and the method further comprises:
determining that a remaining resource of the first communication apparatus and/or a remaining resource of the second communication apparatus meet/meets the resource required for processing the task corresponding to the first service.

9. The method according to claim 1 or 2, wherein determining, based on the first traffic-associated information, the first service processing policy corresponding to the first service comprises:
determining the first service processing policy based on the first traffic-associated information and a third association relationship, wherein the third association relationship comprises an indication of an association relationship between one or more pieces of traffic-associated information and one or more service processing policies, the one or more pieces of traffic-associated information comprise the first traffic-associated information, and the one or more service processing policies comprise the first service processing policy.

10. The method according to claim 9, wherein the method further comprises:
receiving third indication information from a third communication apparatus, wherein the third indication information indicates the third association relationship.

11. The method according to any one of claims 1 to 10, wherein the first service processing policy comprises task allocation information and/or service indicator information, the task allocation information indicates a corresponding task allocated to the first communication apparatus and/or the second communication apparatus for processing the first service, and the service indicator information indicates performance for implementing the first service.

12. The method according to claim 11, wherein the method further comprises:
adjusting, based on the task allocation information, the task for processing the first service by the first communication apparatus; and/or
the service indicator information comprises at least one of a frame rate, a bit rate, or a resolution corresponding to the first service, and the method further comprises: adjusting, based on the service indicator information, at least one of the frame rate, the bit rate, or the resolution corresponding to the first service.

13. A communication method, applied to a third communication apparatus, wherein the method comprises:
receiving one or more pieces of alternative quality of service configuration information corresponding to a first service flow, wherein the alternative quality of service configuration information indicates one or more communication indicators that the first service flow needs to meet; and
sending first indication information, wherein the first indication information indicates a first association relationship, the first association relationship indicates an association relationship between the one or more pieces of alternative quality of service configuration information and one or more service processing policies, the one or more service processing policies comprise a first service processing policy, and the first service processing policy indicates a processing manner of a first service corresponding to the first service flow.

14. The method according to claim 13, wherein the first association relationship is determined based on network status information, resource status information, and the one or more pieces of alternative quality of service configuration information, the network status information comprises information about one or more communication indicators that a network reaches or can support, and the resource status information indicates resource usage of a first communication apparatus and/or resource usage of a second communication apparatus.

15. The method according to claim 13 or 14, wherein the method further comprises:
sending second indication information, wherein the second indication information indicates a second association relationship, the second association relationship comprises an association relationship between the one or more pieces of alternative quality of service configuration information and one or more pieces of traffic-associated information, the one or more pieces of traffic-associated information comprise first traffic-associated information, the first traffic-associated information comprises experienced quality of service information and/or service feature information, the experienced quality of service information indicates an actual transmission parameter of the first service flow in historical duration, and the service feature information indicates an attribute of the first service.

16. A communication method, applied to a fourth communication apparatus, wherein the method further comprises:
receiving first traffic-associated information, wherein the first traffic-associated information is transmitted through a first path, the first path is a path for transmitting a first service flow between the second communication apparatus and a first communication apparatus, the first traffic-associated information comprises experienced quality of service information and/or service feature information, the experienced quality of service information indicates an actual transmission parameter of the first service flow in historical duration, and the service feature information indicates an attribute of a first service corresponding to the first service flow; and
determining first alternative quality of service configuration information based on the first traffic-associated information and a fourth association relationship, wherein the first alternative quality of service configuration information indicates one or more communication indicators that the first service flow needs to meet, the fourth association relationship comprises an association relationship between one or more pieces of alternative quality of service configuration information and one or more pieces of traffic-associated information, the one or more pieces of alternative quality of service configuration information comprise the first alternative quality of service configuration information, and the one or more pieces of traffic-associated information comprise the first traffic-associated information.

17. A communication apparatus, comprising:
a module configured to perform the method according to any one of claims 1 to 12;
a module configured to perform the method according to any one of claims 13 to 15; or
a module configured to perform the method according to claim 16.

18. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement the method according to any one of claims 1 to 12, the method according to any one of claims 13 to 15, or the method according to claim 16 by using a logic circuit or by executing code instructions.

19. A computer program product comprising instructions, wherein when the instructions are run by a communication apparatus, the communication apparatus is enabled to perform the method according to any one of claims 1 to 12, the method according to any one of claims 13 to 15, or the method according to claim 16.

20. A computer-readable storage medium, wherein the storage medium stores a computer program or instructions, and when the computer program or the instructions are executed by a communication apparatus, the method according to any one of claims 1 to 12, the method according to any one of claims 13 to 15, or the method according to claim 16 is implemented.
